# FASCICULE DE BREVET EUROPEEN

(11) **EP 4 268 426 B1**
(45) Date de publication et mention de la délivrance du brevet: **15.04.2026**
(21) Numéro de dépôt: 21854675.2
(22) Date de dépôt: 21.12.2021
(51) Int. Cl.: H04L 9/40, H04L 61/4511

(54) **PROCEDES POUR LA REDIRECTION DE TRAFIC, TERMINAL, CONTROLEUR, SERVEUR D'AUTORISATION, SERVEURS DE RESOLUTION DE NOMS, ET PROGRAMME D'ORDINATEUR CORRESPONDANTS**
VERFAHREN ZUR VERKEHRSUMLEITUNG, ENTSPRECHENDES ENDGERÄT, STEUERUNG, AUTORISIERUNGSSERVER, NAMENSAUFLÖSUNGSSERVER UND COMPUTERPROGRAMM
METHODS FOR TRAFFIC REDIRECTION, CORRESPONDING TERMINAL, CONTROLLER, AUTHORISATION SERVER, NAME RESOLUTION SERVERS AND COMPUTER PROGRAM

(30) Priorité: 23.12.2020 FR 2014109
(43) Date de publication de la demande: 01.11.2023
(73) Titulaire: Orange, 92130 Issy-les-Moulineaux (FR)
(72) Inventeur: BOUCADAIR, Mohamed, 92326 CHÂTILLON CEDEX (FR); JACQUENET, Christian, 92326 CHÂTILLON CEDEX (FR)
(74) Mandataire: Vidon Brevets & Stratégie
(86) Numéro de dépôt international: PCT/FR2021/052420
(87) Numéro de publication internationale: WO 2022/136796

(56) Documents cités:
- CN-A- 110 113 364
- ARYA BHARAT ET AL: "A client-side anti-pharming (CSAP) approach", 2016 INTERNATIONAL CONFERENCE ON CIRCUIT, POWER AND COMPUTING TECHNOLOGIES (ICCPCT), IEEE, 18 March 2016 (2016-03-18), pages 1 - 6, XP032934324, DOI: 10.1109/ICCPCT.2016.7530353
- DAFALLA YOUSIF ET AL: "Prosumer Nanogrids: A Cybersecurity Assessment", IEEE ACCESS, IEEE, USA, vol. 8, 15 July 2020 (2020-07-15), pages 131150 - 131164, XP011800834, DOI: 10.1109/ACCESS.2020.3009611

## Description

### 1. Domaine de l'invention

Le domaine de l'invention est celui des communications au sein d'un réseau de communication, par exemple un réseau informatique mettant en œuvre le protocole IP. En particulier, l'invention concerne les services IP à valeur ajoutée.

Plus précisément, l'invention concerne les services de résolution de noms, par exemple DNS (en anglais « Domain Name System »), et propose une solution pour garantir l'intégrité et la disponibilité du service DNS et détecter la présence d'un équipement malveillant impliqué dans la résolution de noms.

### 2. Art antérieur

Le système DNS est une composante importante dans la fourniture des services IP.

En effet, un service DNS permet d'associer une ressource (par exemple de type nom de domaine (FQDN (« Fully Qualified Domain Name », en anglais)), URI (en anglais « Uniform Resource Identifier », en français « identifiant uniforme de ressource ») avec une ou plusieurs adresses IP pour accéder à cette ressource. Par exemple, le service DNS permet à un terminal d'obtenir les adresses IPv4 et/ou IPv6 associées à un nom de domaine.

Différentes solutions peuvent être considérées pour fournir un service DNS à un terminal.

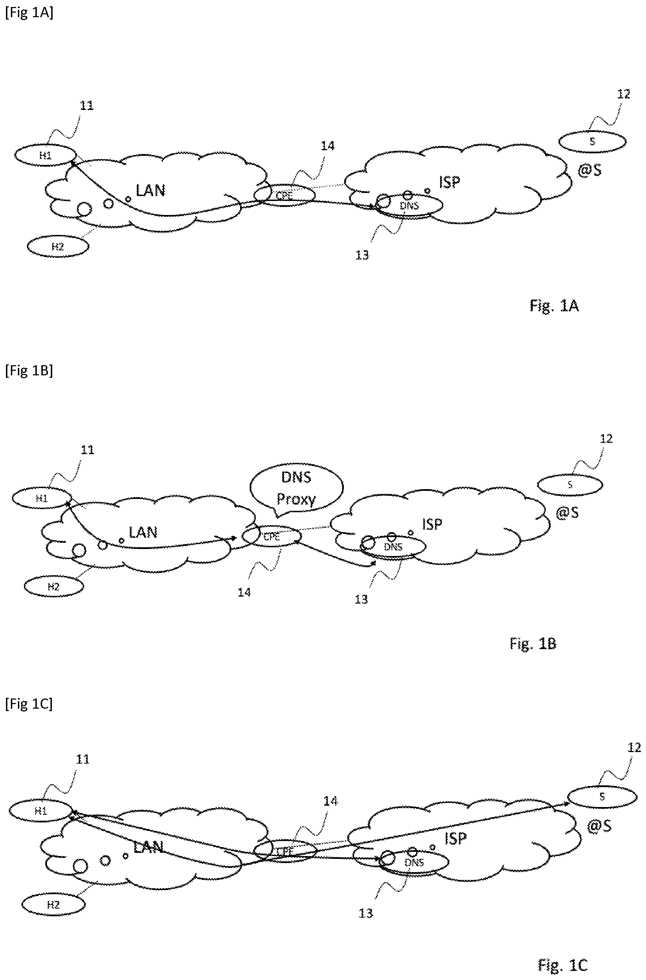

On décrit ci-après, en relation avec les figures 1A à 1C, des exemples reposant sur l'utilisation d'une passerelle résidentielle, encore appelée HG pour « Home Gateway » ou CPE pour « Customer Premises Equipment ».

On rappelle qu'une telle passerelle résidentielle sert classiquement d'interface entre le réseau local de l'utilisateur (« Local Area Network » (LAN), en anglais) et le réseau d'un opérateur auprès duquel l'utilisateur a souscrit une offre de service (« Internet Service Provider » (ISP), en anglais). C'est donc un équipement d'accès au réseau d'un opérateur par lequel transite l'ensemble du trafic caractéristique des différents services souscrits par l'utilisateur, et qui supporte également un ensemble de services fournis localement aux terminaux (par exemple, service FTP « File Transfer Protocol », service NFS « Network File System », serveur média).

Lors du raccordement d'un CPE au réseau, l'opérateur fournit classiquement au CPE les informations nécessaires pour accéder au service de connectivité. Ainsi, l'opérateur alloue une adresse IPv4 et/ou un préfixe IPv6 qui pourront être associés au CPE pour établir des communications IPv4 et/ou IPv6 depuis/vers les terminaux connectés à ce CPE. L'opérateur fournit aussi au CPE une liste de serveurs DNS à utiliser pour la résolution de noms. Pour ce faire, des protocoles comme DHCP pour IPv4 (en anglais « Dynamic Host Configuration Protocol », en français « protocole de configuration dynamique des hôtes », tels que décrits dans les documents RFC 2131 (« Dynamic Host Configuration Protocol », R. Droms et al., mars 1997) et RFC 2132 (« DHCP Options and BOOTP Vendor Extensions », S. Alexander, mars 1997), DHCPv6 pour IPv6, tel que décrit dans le document RFC 8415 (« Dynamic Host Configuration Protocol for IPv6 (DHCPv6) », T. Mrugalski et al., novembre 2018), ou ND pour IPv6 (en anglais « Neighbor Discovery protocol », en français « protocole de découverte des voisins », tel que décrit dans le document RFC 4861 (« Neighbor Discovery for IP version 6 (IPv6) », T. Narten et al., septembre 2007) peuvent être utilisés entre le CPE et le réseau d'accès. D'autres mécanismes tels que le protocole CWMP (« CPE WAN Management Protocol ») peuvent être utilisés pour la configuration du CPE.

Ainsi, comme illustré en Figures 1A à 1C, un terminal H1 11 (ou une application), présent dans un réseau local LAN, souhaite établir une communication avec un serveur distant S 12, identifié par un nom de domaine (par exemple FQDN), par exemple « notreexemple.com ». Un client DNS embarqué dans le terminal H1 11 peut envoyer une requête DNS, encore appelée demande de résolution DNS, de type A (si le terminal supporte IPv4) et/ou AAAA (si le terminal supporte IPv6) à l'un des serveurs DNS 13 fourni par l'opérateur et hébergé dans le réseau d'accès (par exemple) pour obtenir les adresses IP associées au nom de domaine « notreexemple.com ».

On rappelle qu'un serveur joignable en IPv4 peut publier un enregistrement DNS de type A, alors qu'un serveur joignable en IPv6 peut publier un enregistrement de type AAAA. Un serveur joignable en IPv4 et IPv6 peut publier des enregistrements de type A et AAAA. Un terminal qui veut joindre un tel serveur doit préciser le type de l'enregistrement dans la requête DNS (A ou AAAA). Un terminal qui supporte IPv4 et IPv6 peut envoyer deux requêtes DNS : la première requête indique un enregistrement de type A et la deuxième indique un enregistrement de type AAAA.

La requête DNS peut être envoyée directement du terminal H1 11 au serveur DNS 13, comme illustré en figure 1A, ou envoyée au CPE 14 lorsqu'il embarque un proxy DNS (encore appelé relai DNS ou « forwarder DNS » tel que défini dans le document RFC 8499 - « DNS Terminology », P. Hoffman et al., janvier 2019), comme illustré en figure 1B. Dans ce dernier cas, le CPE 14 peut relayer la requête DNS au serveur DNS 13 si aucune réponse n'est trouvée dans son cache local.

Le serveur DNS 13 peut répondre avec une liste d'adresses IP (par exemple @S) si au moins une entrée correspondant au nom de domaine recherché est disponible dans sa base pour le type d'enregistrement demandé (A ou AAAA), ou relayer la requête vers un autre serveur DNS selon la structure hiérarchique de l'architecture DNS si le serveur DNS 13 ne dispose pas d'une telle entrée. La réponse reçue d'un autre serveur DNS situé plus haut dans ladite hiérarchie (serveur autoritaire, par exemple) est relayée à son tour par le serveur DNS 13 initialement sollicité vers le terminal H1 11.

La réponse DNS peut être envoyée directement du serveur DNS 13 au terminal H1 11, comme illustré en figure 1A, ou envoyée au CPE 14 en cas de présence de « forwarder DNS » comme illustré en figure 1B. Dans ce dernier cas, le « forwarder DNS » du CPE 14 relaye la réponse DNS au terminal H1 11.

Comme illustré en figure 1C, le terminal H1 11 peut ainsi extraire l'adresse (ou les adresses) IP contenue(s) dans la réponse (par exemple @S), puis établir une communication avec le serveur S 12, en envoyant une demande de connexion à l'une des adresses retournées (par exemple @S).

Un serveur DNS est appelé serveur nominal s'il a été déclaré, par l'opérateur via le réseau d'accès, dans un équipement de communication, typiquement lors de l'attachement de cet équipement au réseau, ou au moyen d'une configuration préalable, par exemple une configuration « usine ». Lors de cette étape, l'équipement de communication récupère l'information d'accessibilité d'un ou plusieurs serveurs DNS (nominaux) fournis par le ou les opérateur(s). L'information d'accessibilité peut comprendre une liste d'adresses IP, un numéro de port, une référence d'authentification, etc. Un opérateur peut être un fournisseur de service de connectivité, de voix sur IP, etc. ; chacun de ces opérateurs peut ainsi fournir son propre service DNS en hébergeant typiquement un ou plusieurs serveurs DNS au sein de leurs infrastructures. Le service peut être fourni via une infrastructure fixe ou mobile (par exemple, de type PLMN, en anglais « Public Land Mobile Network »).

Par ailleurs, de nos jours, de plus en plus d'entités tierces offrent un service DNS public (« Public Resolvers », en anglais). De tels serveurs DNS sont par exemple exploités par des entités comme « Google Public DNS^{®} », « Cloudflare^{®} » ou QUAD9^{®}.

De plus en plus de clients remplacent ou ajoutent à la configuration DNS fournie par leur opérateur, celle leur permettant d'accéder à ces serveurs DNS publics.

Un équipement de communication peut ainsi récupérer une nouvelle configuration DNS pour chacune de ses interfaces réseau actives (fixe, mobile, WLAN (en anglais « Wireless Local Area Network »), etc.). D'autres informations (par exemple, l'accessibilité de serveurs SIP (en anglais « Session Initiation Protocol »)) peuvent également être fournies à l'équipement de communication.

Un inconvénient des mécanismes de découverte des serveurs DNS au sein d'un réseau LAN est qu'ils ne sont pas sécurisés.

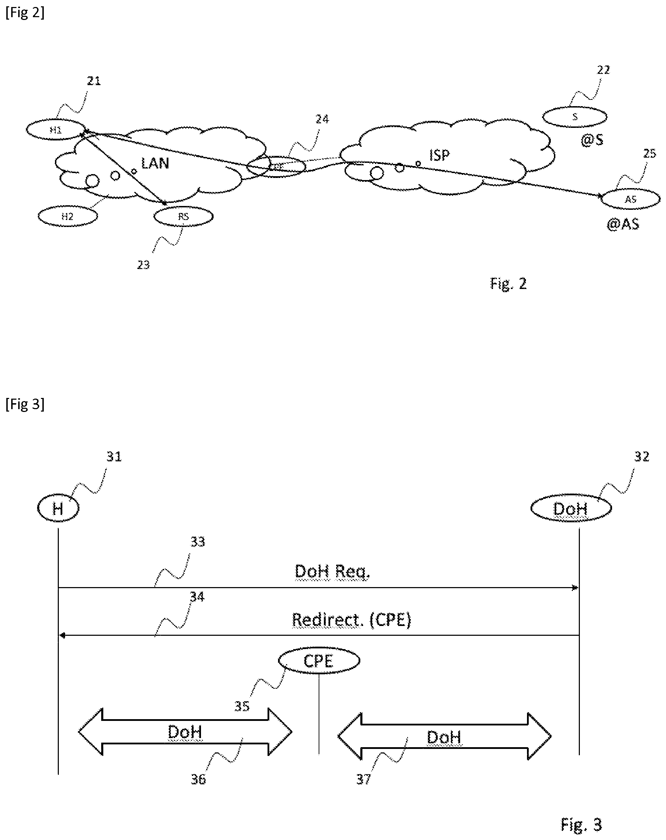

La publication "A client-side anti-pharming (CSAP) approach", XP 032934324, présente les attaques de type pharming mises en œuvre côté client ou côté serveur, et les solutions permettant de les détecter. Comme illustré en figure 2, lorsque le terminal H1 21 se connecte au réseau local LAN, il peut recevoir des messages d'un équipement malveillant RS 23 en réponse à ses sollicitations selon les protocoles DHCP ou ND par exemple. Ainsi, le terminal H1 21 peut recevoir un message de type annonce de routeur RA (en anglais « Router Advertisement ») en provenance de l'équipement malveillant RS 23, et considérer que l'équipement malveillant RS 23 est son routeur par défaut.

Le terminal H121, qui souhaite établir une communication avec le serveur distant S 22 identifié par un nom de domaine, peut alors envoyer une requête DNS à l'équipement malveillant RS 23, au lieu de l'envoyer au CPE 24. L'équipement malveillant RS 23 peut héberger un serveur DNS malveillant et répondre avec l'adresse d'un serveur distant malveillant AS 25 (par exemple @AS).

Le terminal H1 21 peut ensuite extraire l'adresse (ou les adresses) IP contenue(s) dans la réponse (par exemple @AS), puis établir une communication avec le serveur malveillant AS 25.

Ce manque de mécanisme de découverte sécurisée au sein du réseau LAN peut ainsi faciliter l'exécution d'attaques qui permettent d'intercepter des données sensibles de l'utilisateur (par exemple des données personnelles) et la redirection vers des sites malveillants comme illustré en figure 2.

Une première solution envisagée repose sur l'utilisation de certificats d'authentification.

Toutefois, une telle solution n'est pas suffisante pour détecter des équipements malveillants. En effet, un équipement malveillant peut présenter un certificat valide, obtenu auprès d'une autorité de certification (en anglais « Certification Authority ») valide, ce qui peut induire les équipements du LAN en erreur.

Afin de résoudre ce problème de sécurité, certains navigateurs et applications utilisent une liste de serveurs autorisés (« accept-list » ou « white-list », en anglais), maintenue par les fournisseurs de services Internet ou de l'application, pour décider si le serveur DNS découvert est légitime (i.e., de confiance) ou non. A titre d'exemple, la liste de serveurs autorisés (« Trusted Recursive Resolver ») par Firefox^{®} est accessible à partir du lien : https://wiki.mozilla.org/Trusted_Recursive_Resolver.

Si le serveur DNS découvert est légitime (i.e., le serveur découvert appartient à la liste), le client/terminal peut alors procéder à une migration d'une connexion non sécurisée (DNS selon le protocole UDP/TCP sur le port 53, encore appelée Do53) à une connexion sécurisée (par exemple DNS selon le protocole HTTPS (DoH) tel que décrit dans le document RFC 8484 - « DNS Queries over HTTPS (DoH) », P. Hoffman et al., octobre 2018, ou DNS over QUIC (DoQ) tel que décrit dans le document « Specification of DNS over Dedicated QUIC Connections », C. Huitema et al., 20 octobre 2020).

Une difficulté de cette procédure de mise à jour automatique d'une connexion non sécurisée vers une connexion sécurisée (en anglais « auto-upgrade ») est le maintien de la liste des serveurs autorisés. En effet, son contenu et/ou sa taille peuvent évoluer rapidement, notamment par l'ajout ou le retrait de serveurs.

La restriction d'une telle liste de serveurs autorisés aux seuls serveurs exploités par les fournisseurs de services Internet (ISP) ou d'application a également des implications sur la fourniture des services qui requièrent la présence d'un relai DNS, aussi couramment appelé « forwarder DNS », dans le réseau local. En effet, certains services offerts aux terminaux connectés à un réseau local requièrent l'activation d'un « forwarder DNS » local. Il conviendrait donc d'ajouter à cette liste de serveurs autorisés les « forwarders DNS » locaux. Il convient de noter toutefois que ces « forwarders DNS » ne sont pas joignables depuis le réseau Internet.

Afin de résoudre ce problème, il a notamment été proposé une solution de redirection des requêtes DNS convoyées dans des messages HTTPS, i.e. selon une connexion sécurisée, décrite dans le document « Supporting Redirection for DNS Queries over HTTPS (DoH) », M. Boucadair et al., 27 août 2020.

Selon cette technique, l'opérateur (fournisseur de services Internet par exemple) peut ajouter son ou ses serveurs DNS à la liste des serveurs autorisés. Le serveur DNS de l'opérateur avec lequel une connexion sécurisée est établie, également appelé serveur DoH, ou un autre serveur partenaire, est annoncé par le CPE dans le LAN. Un nom de domaine et un certificat sont alors générés par l'opérateur pour les CPE qui embarquent un « forwarder DNS ».

Comme illustré en figure 3, un client DoH (par exemple embarqué dans un terminal 31 connecté sur le LAN) met en œuvre une procédure de mise à jour automatique de sa connexion Do53 en se connectant au serveur DoH 32 annoncé. Pour ce faire, le client DoH envoie une requête DoH 33 au serveur DoH 32.

Le serveur DoH 32 renvoie un message de redirection 34 en réponse à la requête du client pour lui demander d'établir une connexion DoH avec le CPE 35 hébergeant le « forwarder DNS ». Le serveur DoH 32 communique au client l'identifiant à utiliser pour des besoins d'authentification (par exemple, authentification PKIX pour « Public-Key Infrastructure using X.509 » en anglais) ainsi que l'adresse ou les adresses pour joindre le « forwarder DNS » du CPE 35. D'autres informations peuvent aussi être retournées (par ex. un numéro de port).

Un exemple d'objet JSON (« JavaScript Object Notation ») retourné par le serveur DoH 32 de l'opérateur est donné en annexe.

A réception du message de redirection 34, le client 31 établit une session DoH 36 avec le CPE 35 en utilisant les informations ainsi récupérées. Le CPE 35 maintient une session DoH 37 avec le serveur DoH 32 de l'opérateur. Cette session peut être utilisée notamment pour servir les requêtes qui ne peuvent pas être traitées localement par le « forwarder DNS » local embarqué dans le CPE 35, dans cet exemple.

Cependant, le maintien de cette connexion DoH ne suffit pas pour minimiser le risque de piratage des requêtes DNS envoyées par le client/terminal. En effet, le mécanisme ne permet pas de détecter la présence de serveurs malveillants, particulièrement dans le LAN. Par exemple, un serveur malveillant peut usurper l'adresse IP du CPE et intercepter ainsi les requêtes DoH envoyées par un terminal du LAN. Le serveur malveillant peut aussi bloquer les messages envoyés par le CPE.

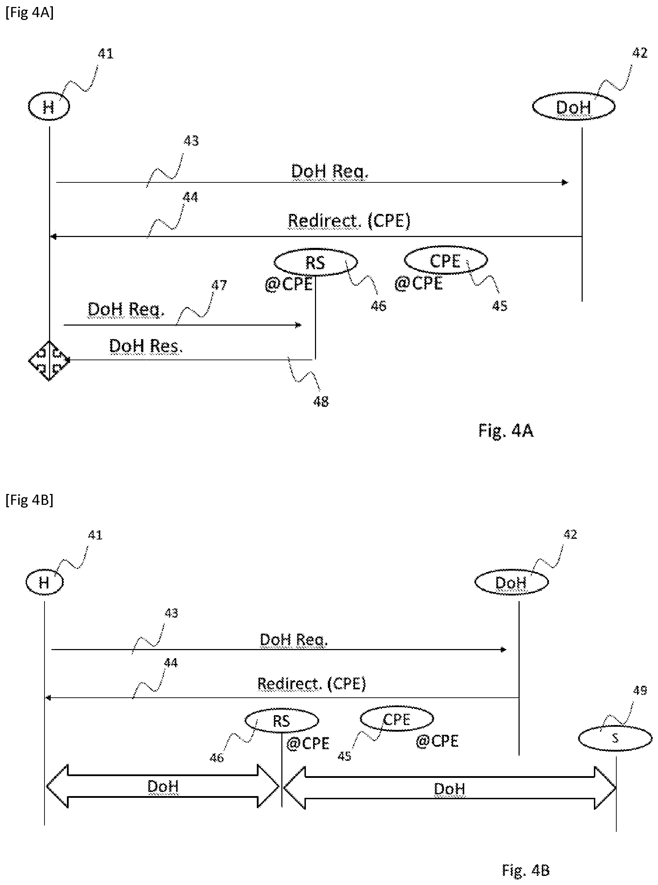

Ainsi, comme illustré en figure 4A, un terminal 41 peut envoyer une requête DoH 43 à un serveur DoH 42 de l'opérateur, et recevoir en réponse un message de redirection 44, communiquant au terminal 41 l'identifiant à utiliser pour les besoins de l'authentification PKIX ainsi que l'adresse ou les adresses pour joindre le CPE légitime 45. Dans le cas où un serveur malveillant 46 a usurpé l'adresse IP (@CPE) du CPE 45, le terminal 41 tente d'établir une session avec le serveur malveillant 46, en envoyant une requête DoH 47. Toutefois, les réponses 48 envoyées par le serveur malveillant 46 sont rejetées par le terminal 41 car l'authentification PKIX échoue, et le terminal 41 ne peut pas accéder au service. Si le terminal 41 essaie de se connecter au serveur DoH 42 de l'opérateur en ignorant l'instruction de redirection, le serveur DoH 42 enverra systématiquement un message de redirection similaire au message 44 précédemment décrit, communiquant au terminal 41 l'identifiant à utiliser pour les besoins de l'authentification PKIX ainsi que l'adresse ou les adresses pour joindre le CPE légitime 45.

Un inconvénient d'une telle technique selon l'art antérieur est donc le risque d'indisponibilité du service de connectivité, incluant les services locaux (c'est à dire, les services offerts grâce à la présence de « forwarder DNS » dans les CPE).

De plus, si, comme illustré en figure 4B, le serveur malveillant 46 parvient à acquérir les identifiants d'authentification utilisés par le CPE 45, une connexion sécurisée peut être établie entre le terminal 41 et le serveur malveillant 46, et le serveur malveillant 46 et un serveur distant 49. En dépit de l'existence d'une telle connexion sécurisée, le serveur malveillant 46 peut récupérer l'intégralité des requêtes DNS transmises par le terminal 41, voire les données personnelles de l'utilisateur du terminal.

L'établissement d'une connexion sécurisée ne suffit donc pas à garantir la légitimité du serveur avec lequel cette connexion est établie.

L'activation de protocoles tels que DoH (protocole de la couche application) ou DoT (protocole de la couche transport, tel que décrit dans le document RFC 7858 - « Specification for DNS over Transport Layer Security (TLS) » Z. Hu et al., mai 2016) ne permet donc pas de résoudre le problème évoqué précédemment de sécurité des mécanismes de découverte de serveurs DNS légitimes au sein d'un réseau LAN.

Il existe donc un besoin d'une nouvelle solution permettant de garantir la continuité de service reposant sur le service DNS et de préserver la sécurité des communications des utilisateurs, tout en offrant des services à valeur ajoutée et en garantissant la légitimité des serveurs DNS auxquels ces utilisateurs transmettent des requêtes de résolution de noms.

### 3. Exposé de l'invention

L'invention propose différents procédés pour une redirection d'un trafic DNS d'un client DNS, mis en œuvre dans différentes entités, permettant de rediriger de façon sécurisée le trafic d'un premier serveur de résolution de noms vers un deuxième serveur de résolution de noms, lorsqu'une procédure de redirection est activée et autorisée pour ce client DNS.

On note que plusieurs clients DNS peuvent être activés dans un même terminal. Dans ce cas, la solution décrite ci-dessous peut être mise en œuvre indépendamment pour chaque client DNS souhaitant l'activer. Par la suite, on utilise toutefois indifféremment les termes « client DNS » et « terminal ».

L'invention propose ainsi un procédé de résolution de noms, mis en œuvre dans un terminal connecté à un réseau de communication, comprenant :
- la transmission, à destination d'un premier serveur de résolution de noms, d'un message de résolution de noms via un canal de communication sécurisé entre ledit terminal et ledit premier serveur de résolution de noms, par exemple en s'appuyant sur des protocoles de la couche application (par exemple HTTPS) ou de la couche transport (par exemple QUIC/UDP),
- si une redirection du trafic DNS du terminal est autorisée (par exemple autorisée par défaut pour le terminal ou autorisée par une entité distincte, par exemple un serveur d'autorisation), l'obtention d'au moins un identifiant d'un deuxième serveur de résolution de noms pour ladite redirection,
- l'exécution d'au moins une action de gestion de ladite redirection du trafic DNS du terminal vers le deuxième serveur de résolution de noms, parmi au moins :
   - vérifier la légitimité dudit deuxième serveur de résolution de noms,
   - envoyer une indication d'un échec d'une connexion du terminal avec ledit deuxième serveur de résolution de noms,
   - demander la désactivation de ladite redirection du trafic DNS vers ledit deuxième serveur de résolution de noms.

La solution proposée permet ainsi de mettre en place différentes actions suite ou concomitamment à l'obtention d'un ou plusieurs identifiants d'un deuxième serveur de résolution de noms, comme une procédure de vérification de la légitimité du deuxième serveur de résolution de noms, une procédure permettant de pallier un problème d'authentification du deuxième serveur de résolution de noms (par exemple une procédure de génération d'au moins un nouvel identifiant du deuxième serveur de résolution de noms), une procédure de désactivation de la redirection, etc.

La solution proposée offre ainsi une solution pour préserver la continuité de service reposant sur le service DNS et/ou la sécurité des communications.

Une telle action de gestion peut notamment être spécifiée dans l'entête ou le corps du message de résolution de noms émis par le terminal. De cette façon, à réception du message de résolution de noms, le premier serveur peut déterminer la procédure à mettre en place.

Par exemple, un message de résolution de noms de type DoH GET(fwd-check) ou DoH POST(fwd-check) peut être émis pour engager une action de type vérification de la légitimité du deuxième serveur de résolution de noms. Un message de résolution de noms de type DoH GET(redirect-auth-failed) ou DoH POST(redirect-auth-failed) peut être émis pour engager une action de type envoi d'une indication d'un échec d'une connexion du terminal avec le deuxième serveur de résolution de noms. Un message de résolution de noms de type DoH GET(rd-disable) or POST(rd-disable) peut être émis pour engager une action de type demande de désactivation de ladite redirection du trafic DNS vers ledit deuxième serveur de résolution de noms. En particulier, une indication d'un échec d'une connexion du terminal avec ledit deuxième serveur de résolution de noms peut être de type signalement de l'échec de la connexion ou indication explicite de générer un nouvel identifiant.

En particulier, le deuxième serveur peut être ajouté à une liste de serveurs autorisés (« accept-list ») pour le service de redirection du trafic DNS. Le terminal peut alors procéder à une migration d'une connexion non sécurisée à une connexion sécurisée avec ce deuxième serveur, et à une redirection du trafic DNS vers ce deuxième serveur en utilisant le canal de communication sécurisé. Si la vérification de la légitimité du deuxième serveur échoue, il est possible de supprimer (ou de ne pas ajouter) ce deuxième serveur de la liste de serveurs autorisés. La redirection vers ce deuxième serveur peut alors être désactivée par le terminal.

Par exemple, ledit au moins un identifiant du deuxième serveur de résolution de noms appartient au groupe comprenant : un nom de domaine identifiant le deuxième serveur, une adresse pour joindre le deuxième serveur, etc.

Comme indiqué précédemment, une action de gestion de la redirection du trafic DNS du terminal comprend par exemple l'envoi d'une indication d'un échec d'une connexion du terminal avec ledit deuxième serveur de résolution de noms. Par exemple, une telle action engendre en outre l'obtention d'un nouvel identifiant du deuxième serveur de résolution de noms.

De cette façon, lorsque le terminal n'a pas pu authentifier le deuxième serveur de résolution de noms, il peut déclencher une action permettant d'obtenir un nouvel identifiant du deuxième serveur.

Une autre action de gestion de la redirection du trafic DNS du terminal est la vérification de la légitimité du deuxième serveur de résolution de noms. Par exemple, une telle action comprend :
- la réception d'au moins une information de vérification de la légitimité dudit deuxième serveur de résolution de noms, en provenance dudit premier serveur de résolution de noms,
- la vérification de la légitimité d'une entité émettrice d'une réponse à une requête de résolution de noms, émise par le terminal en utilisant ledit au moins un identifiant du deuxième serveur et générée à partir de ladite moins une information de vérification, par comparaison de ladite réponse avec une réponse-test obtenue à partir de ladite au moins une information de vérification.

Encore une autre action de gestion de la redirection du trafic DNS du terminal est la demande de désactivation de la redirection du trafic DNS vers ledit deuxième serveur de résolution de noms. Une telle action peut notamment être exécutée à la suite d'une autre action, par exemple lorsque la vérification de la légitimité du deuxième serveur a échoué ou après un ou plusieurs échecs de connexion du terminal au deuxième serveur, malgré la génération d'au moins un nouvel identifiant du deuxième serveur.

L'invention concerne par ailleurs un procédé de contrôle d'une redirection d'un trafic DNS autorisée pour un terminal dans un réseau de communication, ledit terminal ayant émis un message de résolution de noms via un canal de communication sécurisé entre ledit terminal et un premier serveur de résolution de noms.

Un tel procédé de contrôle est mis en œuvre dans un contrôleur du réseau, également appelé orchestrateur, et comprend :
- l'échange d'informations avec un deuxième serveur de résolution de noms identifié pour le terminal pour ladite redirection autorisée du trafic DNS du terminal, lesdites informations comprenant au moins une information, fournie par le contrôleur au deuxième serveur de résolution de noms, de vérification par ledit terminal de la légitimité du deuxième serveur de résolution de noms et/ou au moins une information, fournie par le deuxième serveur de résolution de noms au contrôleur, pour la résolution d'un échec d'une connexion du terminal avec le deuxième serveur de résolution de noms.

Un tel procédé de contrôle peut notamment être mis en œuvre pour assister le terminal dans l'exécution d'une action de gestion de la redirection du trafic DNS, notamment une action de type envoi d'une indication d'un échec d'une connexion du terminal avec ledit deuxième serveur de résolution de noms ou une action de type vérification de la légitimité du deuxième serveur de résolution de noms.

Le premier serveur de résolution de noms et le contrôleur de réseau peuvent former une même entité, ou appartenir à des entités distinctes. Dans ce deuxième cas, le premier serveur de résolution de noms et le contrôleur de réseau peuvent s'échanger des messages pour communiquer.

En particulier, un tel contrôleur peut disposer d'au moins un identifiant du deuxième serveur de résolution de noms si le deuxième serveur est un routeur par défaut défini pour le réseau de communication, par exemple un CPE. En variante, le contrôleur met en œuvre l'obtention d'au moins un identifiant du deuxième serveur de résolution de noms en provenance d'un serveur d'autorisation du réseau.

Selon un mode de réalisation particulier, au moins une desdites informations fournies par le deuxième serveur de résolution de noms pour la résolution d'un échec d'une connexion du terminal avec le deuxième serveur de résolution de noms comprend au moins un nouvel identifiant dudit deuxième serveur de résolution de noms.

En variante, le procédé mis en œuvre par le contrôleur comprend l'obtention, en provenance d'un routeur par défaut défini pour le réseau de communication, d'au moins un nouvel identifiant dudit deuxième serveur de résolution de noms.

Dans les deux cas, le contrôleur peut transmettre ledit au moins un nouvel identifiant à un serveur d'autorisation du réseau.

De telles actions peuvent notamment être mises en œuvre lorsque le terminal exécute une action de gestion de la redirection du terminal de type envoi d'une indication d'un échec d'une connexion du terminal avec ledit deuxième serveur de résolution de noms.

Selon un mode de réalisation particulier, le procédé mis en œuvre par le contrôleur comprend, lors dudit échange d'informations, la transmission audit deuxième serveur de résolution de noms d'au moins un identifiant dudit terminal autorisé à vérifier la légitimité du deuxième serveur de résolution de noms ou au moins un identifiant d'un réseau auquel appartient ledit terminal.

Une telle action peut notamment être mise en œuvre lorsque le terminal exécute une action de type vérification de la légitimité du deuxième serveur.

De cette façon, le contrôleur peut informer le deuxième serveur de résolution de noms du ou des terminaux autorisés à vérifier la légitimité du deuxième serveur de résolution de noms.

Par exemple, ledit au moins un identifiant du terminal appartient au groupe comprenant : une adresse IPv4/IPv6, un préfixe IPv4/IPv6, un identifiant DNS-ID d'un certificat du terminal ou tout autre identifiant renseigné dans le champ « Subject Alternative Name » du certificat (tel que décrit dans le document Internet X.509 Public Key Infrastructure Certificate and Certificate Revocation List (CRL) Profile, D. Cooper et al., Mai 2008), etc.

L'invention concerne par ailleurs un procédé de gestion d'une redirection d'un trafic DNS autorisée pour un terminal dans un réseau de communication, ledit terminal ayant émis un message de résolution de noms via un canal de communication sécurisé entre ledit terminal et un premier serveur de résolution de noms.

Un tel procédé de gestion est mis en œuvre dans un deuxième serveur de résolution de noms dudit réseau identifié pour le terminal pour ladite redirection, et comprend :
- l'échange d'informations avec un contrôleur du réseau, lesdites informations comprenant au moins une information, fournie par le contrôleur au deuxième serveur de résolution de noms, de vérification par ledit terminal de la légitimité du deuxième serveur de résolution de noms et/ou au moins une information, fournie par le deuxième serveur de résolution de noms au contrôleur, pour la résolution d'un échec d'une connexion du terminal avec le deuxième serveur de résolution de noms.

Un tel procédé de gestion peut notamment être mis en œuvre pour assister le terminal dans l'exécution d'une action de gestion de la redirection du trafic DNS.

En particulier, le procédé de gestion comprend la transmission audit terminal d'une réponse à une requête de résolution de noms, ladite réponse portant une réponse-test obtenue à partir d'au moins un identifiant du terminal et de ladite au moins une information de vérification de la légitimité dudit deuxième serveur de résolution de noms obtenue lors de l'échange avec le contrôleur.

La requête de résolution de noms peut notamment être une requête-test, générée à partir de ladite au moins une information de vérification.

Une telle action peut notamment être mise en œuvre lorsque le terminal exécute une action de type vérification de la légitimité du deuxième serveur.

Selon un autre mode de réalisation, le procédé de gestion comprend :
- la génération d'au moins un nouvel identifiant dudit deuxième serveur de résolution de noms,
- la transmission, audit contrôleur de réseau, dudit au moins un nouvel identifiant lors de l'échange avec ledit contrôleur.

De telles actions peuvent notamment être mises en œuvre lorsque le terminal exécute une action de gestion de la redirection du terminal de type envoi d'une indication d'un échec d'une connexion du terminal avec ledit deuxième serveur de résolution de noms.

L'invention concerne encore un procédé de traitement d'une redirection d'un trafic DNS autorisée pour un terminal dans un réseau de communication, mis en œuvre dans un premier serveur de résolution de noms dudit réseau, comprenant :
- la réception d'un message de résolution de noms en provenance dudit terminal, reçu via un canal de communication sécurisé entre ledit terminal et ledit premier serveur de résolution de noms,
- l'obtention, en provenance d'un serveur d'autorisation, d'une autorisation de redirection pour ledit terminal et d'au moins un identifiant d'un deuxième serveur de résolution de noms identifié pour ledit terminal pour ladite redirection, et
- la transmission, audit terminal, d'un message de redirection portant ledit au moins un identifiant d'un deuxième serveur de résolution de noms.

Le premier serveur de résolution de noms communique d'une part avec le terminal via un canal de communication sécurisé, et d'autre part avec un serveur d'autorisation apte à communiquer avec un contrôleur de réseau, lui-même apte à communiquer avec le deuxième serveur de résolution de noms. Le premier serveur de résolution de noms et le serveur d'autorisation peuvent former une même entité, ou appartenir à des entités distinctes. Dans ce deuxième cas, le premier serveur de résolution de noms et le serveur d'autorisation peuvent s'échanger des messages pour communiquer.

Par exemple, si ledit premier serveur de résolution de noms et ledit serveur d'autorisation appartiennent à des entités distinctes, l'obtention d'une autorisation de redirection pour le terminal et d'au moins un identifiant d'un deuxième serveur de résolution de noms identifié pour ledit terminal met en œuvre :
- la transmission, à destination du serveur d'autorisation, d'une requête de vérification d'autorisation de redirection portant au moins un identifiant dudit terminal,
- la réception de l'autorisation de redirection pour le terminal en provenance dudit serveur d'autorisation et dudit au moins un identifiant d'un deuxième serveur de résolution de noms identifié pour le terminal pour ladite redirection.

Selon un premier mode de réalisation, le premier serveur de résolution de noms met en œuvre :
- l'obtention d'au moins une information de vérification de la légitimité dudit deuxième serveur de résolution de noms (en provenance d'un serveur d'autorisation ou générée par le premier serveur de résolution de noms), et
- la transmission audit terminal de ladite au moins une information de vérification.

De telles étapes peuvent notamment être mises en œuvre lorsque le terminal exécute une action de type vérification de la légitimité du deuxième serveur, pour que le premier serveur puisse obtenir au moins une information de vérification.

Selon une première variante, l'obtention d'au moins une information de vérification met en œuvre la génération d'au moins un test de vérification par le premier serveur de résolution de noms et la transmission dudit au moins un test de vérification audit serveur d'autorisation.

Le premier serveur génère ainsi au moins un test de vérification (par exemple il génère un nom de domaine et l'entrée DNS associée), et transmet le ou les tests d'une part au serveur d'autorisation (par exemple dans la requête de vérification d'autorisation de redirection ou dans un message « Accounting-Request ») et d'autre part au terminal (par exemple dans le message de redirection « DoH 3xx »).

Selon une deuxième variante, l'obtention d'au moins une information de vérification met en œuvre la réception d'au moins un test de vérification en provenance dudit serveur d'autorisation.

Dans ce cas, le premier serveur transmet le ou les tests uniquement au terminal (par exemple dans le message de redirection « DoH 3xx »). Il n'est pas nécessaire de transmettre le ou les tests au serveur d'autorisation puisque c'est lui-même qui les a générés.

Selon un deuxième mode de réalisation, le premier serveur de résolution de noms met en œuvre :
- l'obtention, en provenance dudit serveur d'autorisation, d'au moins un nouvel identifiant dudit deuxième serveur de résolution de noms,
- la transmission audit terminal dudit au moins un nouvel identifiant dudit deuxième serveur de résolution de noms.

De telles étapes peuvent notamment être mises en œuvre lorsque le terminal exécute une action de type envoi d'une indication d'un échec d'une connexion du terminal avec ledit deuxième serveur de résolution de noms, pour que le premier serveur puisse obtenir au moins un nouvel identifiant dudit deuxième serveur de résolution de noms.

Par exemple, si ledit premier serveur de résolution de noms et ledit serveur d'autorisation appartiennent à des entités distinctes, l'obtention d'au moins un nouvel identifiant dudit deuxième serveur de résolution de noms met en œuvre :
- la transmission, à destination dudit serveur d'autorisation, d'une requête de génération d'au moins un nouvel identifiant dudit deuxième serveur de résolution de noms,
- la réception, en provenance dudit serveur d'autorisation, d'au moins un nouvel identifiant dudit deuxième serveur de résolution de noms.

Si la procédure à mettre en place est de type génération d'au moins un nouvel identifiant du deuxième serveur de résolution de noms, le premier serveur peut contacter le serveur d'autorisation pour obtenir au moins un nouvel identifiant dudit deuxième serveur de résolution de noms, en lui envoyant une requête de génération d'au moins un nouvel identifiant. Par exemple, une telle requête est transmise dans la requête de vérification d'autorisation de redirection ou dans un message « Accounting-Request ».

Le premier serveur peut ainsi recevoir au moins un nouvel identifiant du deuxième serveur et le transmettre au terminal (par exemple dans le message de redirection « DoH 3xx »).

Selon un autre mode de réalisation, le premier serveur de résolution de nom peut procéder à la désactivation de la redirection de trafic DNS vers ledit deuxième serveur de résolution de noms suite à au moins un échec d'une connexion du terminal avec ledit deuxième serveur de résolution de noms, ou la désactivation d'une redirection de trafic DNS vers un troisième serveur de résolution de noms désigné par défaut pour le terminal sur demande dudit terminal.

De telles étapes peuvent notamment être mises en œuvre si le terminal exécute une action de type demander la désactivation de la redirection du trafic DNS vers ledit deuxième serveur de résolution de noms.

Le déclenchement de la désactivation de la redirection peut aussi être mis en œuvre sur requête du terminal. La désactivation de la redirection peut notamment être décidée (par le terminal ou par le premier serveur, par exemple) après N échecs d'authentification, avec N un entier supérieur ou égal à 1, par exemple égal à 3.

En particulier, le premier serveur de résolution de noms peut procéder à la désactivation de la redirection d'une redirection de trafic DNS vers un serveur de résolution de noms désigné par défaut (troisième serveur de résolution de noms), et donc non désigné par le serveur d'autorisation.

Selon une première variante, le premier serveur demande l'autorisation au serveur d'autorisation avant de procéder à la désactivation de la redirection. Par exemple, le premier serveur de résolution de noms met en œuvre :
- la transmission, au serveur d'autorisation, d'une requête de désactivation de la redirection vers ledit deuxième serveur de résolution de noms,
- la réception d'une autorisation de désactivation, en provenance dudit serveur d'autorisation.

Selon une deuxième variante, le premier serveur prend la décision de désactiver la redirection vers le deuxième serveur, et en informe le serveur d'autorisation. Par exemple, le premier serveur de résolution de noms met en œuvre :
- la transmission, audit serveur d'autorisation, d'une information selon laquelle la redirection vers ledit deuxième serveur de résolution de noms est désactivée.

L'invention concerne encore un procédé d'autorisation d'une redirection d'un trafic DNS d'un terminal dans un réseau de communication, mis en œuvre dans un serveur d'autorisation dudit réseau, ledit terminal ayant émis un message de résolution de noms via un canal de communication sécurisé entre ledit terminal et un premier serveur de résolution de noms.

Un tel procédé d'autorisation comprend, si une redirection du trafic DNS du terminal est autorisée :
- l'obtention d'au moins un identifiant d'un deuxième serveur de résolution de noms identifié pour ledit terminal pour ladite redirection, et
- la transmission, à destination dudit premier serveur de résolution de noms, d'une autorisation de redirection pour ledit terminal et dudit au moins un identifiant d'un deuxième serveur de résolution de noms.

L'utilisation d'un tel serveur d'autorisation permet notamment d'améliorer la fiabilité des différentes procédures / actions, notamment pour la vérification de la légitimité du deuxième serveur ou pour résoudre les problèmes d'authentification.

En particulier, de telles étapes sont mises en œuvre suite à la réception d'une requête de vérification d'autorisation de redirection en provenance du premier serveur de résolution de noms.

Selon un mode de réalisation particulier, un tel procédé d'autorisation comprend la transmission, à destination d'un contrôleur dudit réseau, d'au moins un élément appartenant au groupe comprenant :
- au moins un identifiant dudit terminal,
- au moins un identifiant d'un réseau auquel appartient ledit terminal,
- ledit au moins un identifiant dudit deuxième serveur de résolution de noms,
- au moins une information de vérification de la légitimité dudit deuxième serveur de résolution de noms.

Notamment, le procédé d'autorisation peut mettre en œuvre l'obtention d'au moins une information de vérification de la légitimité dudit deuxième serveur de résolution de noms préalablement à la transmission de ladite information de vérification de la légitimité au contrôleur.

Cette étape peut notamment être mise en œuvre lorsque le terminal exécute une action de type vérification de la légitimité du deuxième serveur de résolution de noms, pour que le serveur d'autorisation puisse obtenir au moins une information de vérification de la légitimité dudit deuxième serveur de résolution de noms.

Par exemple, l'obtention d'au moins une information de vérification met en œuvre la réception d'au moins un test de vérification en provenance dudit premier serveur de résolution de noms (génération d'une requête-test par le premier serveur de résolution). En variante, l'obtention d'au moins une information de vérification met en œuvre la génération d'au moins un test de vérification par le serveur d'autorisation et la transmission dudit au moins un test de vérification audit premier serveur de résolution de noms (génération d'une requête-test par le serveur d'autorisation).

Selon un autre mode de réalisation, le procédé d'autorisation comprend :
- l'obtention, en provenance dudit contrôleur de réseau, d'au moins un nouvel identifiant dudit deuxième serveur de résolution de noms,
- la transmission, audit premier serveur de résolution de noms, dudit au moins un nouvel identifiant dudit deuxième serveur de résolution de noms.

De telles étapes peuvent notamment être mises en œuvre lorsque le terminal exécute une action de type envoi d'une indication d'un échec d'une connexion du terminal avec ledit deuxième serveur de résolution de noms, pour que le serveur d'autorisation puisse obtenir au moins un nouvel identifiant du deuxième serveur de résolution de noms.

L'invention concerne également, dans d'autres modes de réalisation, un terminal, un contrôleur de réseau, un premier serveur de résolution de noms, un deuxième serveur de résolution de noms et un serveur d'autorisation correspondants.

Certaines de ces entités peuvent former une même entité (par exemple le premier serveur de résolution de noms et/ou le serveur d'autorisation et/ou le contrôleur peuvent être co-localisés). Dans ce cas, différents modules (par exemple un module associé au premier serveur de résolution de noms, un module associé au serveur d'autorisation, un module associé au contrôleur de réseau) peuvent communiquer au sein d'une même entité, par exemple en échangeant des messages.

L'invention concerne par ailleurs un système pour une redirection d'un trafic DNS dans un réseau de communication comprend un terminal, un contrôleur de réseau, un premier serveur de résolution de noms, un deuxième serveur de résolution de noms et un serveur d'autorisation correspondants.

Dans un autre mode de réalisation, l'invention concerne un ou plusieurs programmes d'ordinateur comportant des instructions pour la mise en œuvre d'au moins un procédé selon au moins un mode de réalisation de l'invention, lorsque ce ou ces programmes est/sont exécuté(s) par un processeur.

Les procédés selon l'invention peuvent donc être mis en œuvre de diverses manières, notamment sous forme câblée et/ou sous forme logicielle.

En particulier, certaines étapes peuvent être implémentées par un module générique, une application, un résolveur DNS (« resolver » ou « stub-resolver », en anglais), etc. Ces différents modules peuvent être embarqués dans un CPE, un terminal (« User Equipment » en anglais), une clé équipée par exemple d'un port USB (« (USB) dongle » en anglais), etc.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la [Fig 1A], présentée en relation avec l'art antérieur, illustre un exemple de déploiement d'un service DNS sans relai (« forwarder DNS ») embarqué dans le CPE,
- la [Fig 1B], présentée en relation avec l'art antérieur, illustre un exemple de déploiement d'un service DNS avec relai DNS embarqué dans le CPE,
- la [Fig 1C], présentée en relation avec l'art antérieur, illustre un exemple d'établissement d'une connexion avec un serveur distant,
- la [Fig 2], également présentée en relation avec l'art antérieur, illustre un exemple d'interception des requêtes DNS par un équipement malveillant,
- la [Fig 3] illustre une procédure de mise à jour automatique de la connexion DNS selon l'art antérieur,
- la [Fig 4A] et la [Fig 4B], également présentées en relation avec l'art antérieur, illustrent des exemples de problèmes rencontrés lors de la procédure de mise à jour automatique de la connexion Do53 vers une connexion DNS chiffrée selon l'art antérieur,
- les [Fig 5A], [Fig 5B], [Fig 5C], [Fig 5D] et [Fig 5E] présentent les principales étapes mises en œuvre pour la gestion d'une redirection du trafic DNS selon au moins un mode de réalisation de l'invention,
- la [Fig 6] illustre un exemple des messages échangés entre un terminal, un premier serveur de résolution de noms et un serveur d'autorisation,
- la [Fig 7A] et la [Fig 7B] illustrent un exemple des messages échangés entre un terminal, un premier serveur de résolution de noms et un serveur d'autorisation selon un premier mode de réalisation,
- la [Fig 8] présente les différentes entités intervenant pour la redirection de trafic selon au moins un mode de réalisation de l'invention,
- la [Fig 9A] et la [Fig 9B] illustrent un exemple des messages échangés entre un terminal, un premier serveur de résolution de noms et un serveur d'autorisation selon un deuxième mode de réalisation,
- la [Fig 10A] et la [Fig 10B] illustrent un exemple des messages échangés entre un terminal, un premier serveur de résolution de noms et un serveur d'autorisation pour la désactivation d'une procédure de redirection de trafic selon au moins un mode de réalisation de l'invention,
- la [Fig 11] présente la structure simplifiée des différentes entités selon un mode de réalisation particulier.

### 5. Description d'un mode de réalisation de l'invention

### 5.1 Principe général

L'invention propose une solution sécurisée pour la gestion de la redirection du trafic DNS d'un terminal, d'un premier serveur de résolution de noms vers un deuxième serveur de résolution de noms identifié pour le terminal pour la redirection.

Pour ce faire, on considère qu'un terminal peut émettre des requêtes de résolution de noms vers un premier serveur de résolution de noms en utilisant un canal sécurisé, et que le premier serveur de résolution de noms souhaite mettre en place une procédure de redirection du trafic DNS vers un deuxième serveur de résolution de noms identifié pour le terminal pour la redirection.

Le principe général de l'invention repose sur l'exécution, par le terminal, d'au moins une action de gestion de la redirection du trafic DNS du terminal vers le deuxième serveur identifié pour le terminal pour la redirection. Par exemple, une telle action est de type vérification de la légitimité du deuxième serveur de résolution de noms, envoi d'une indication d'un échec d'une connexion du terminal avec le deuxième serveur de résolution de noms, demande de désactivation de la redirection de trafic DNS vers le deuxième serveur de résolution de noms, etc.

La solution proposée permet ainsi de détecter, éviter et/ou corriger les problèmes d'usurpation d'identité ou d'authentification tels que décrits en relation avec les figures 4A et 4B, qui peuvent empêcher un terminal d'accéder aux services qui reposent sur le service DNS (particulièrement, le service DNS chiffré (« encrypted DNS », en anglais)).

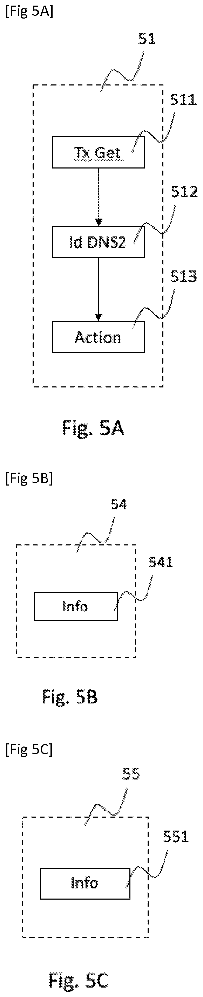

On présente, en relation avec les figures 5A à 5F, les principales étapes mises en œuvre selon l'invention, dans un système comprenant un terminal 51, un premier serveur de résolution de noms 52, un serveur d'autorisation 53, un contrôleur de réseau 54, et un deuxième serveur de résolution de noms 55.

Par exemple, on considère un réseau local connecté au réseau d'un opérateur par un routeur, par exemple un CPE, et que le premier serveur de résolution de noms 52 appartient au réseau de l'opérateur et le terminal 51 au réseau local.

Bien entendu, d'autres contextes sont envisageables. Par exemple, le premier serveur de résolution de noms peut être un serveur légitime du réseau de l'opérateur qui redirige le trafic DNS vers au moins un deuxième serveur de résolution de noms du réseau de l'opérateur ou d'un autre réseau plus proche du terminal.

Le terminal et le deuxième serveur de résolution de noms ne sont donc pas nécessairement attachés à un même réseau, et la redirection n'est pas nécessairement mise en œuvre vers un serveur du réseau local. De même, le premier serveur de résolution de noms peut être attaché à un réseau distinct du réseau d'accès.

Ainsi, on entend par la suite par « réseau de communication » un ensemble comprenant un ou plusieurs réseaux auxquels sont attachés le terminal 51, le premier serveur de résolution de noms 52 et le deuxième serveur de résolution de noms 55. D'autres entités pouvant intervenir dans la gestion de la redirection du trafic DNS peuvent également être attachées à ce ou ces réseaux, notamment un serveur d'autorisation 53, permettant en particulier de vérifier si la redirection est autorisée pour le terminal, et éventuellement un contrôleur de réseau 54. Chacune de ces entités peut être attachée à un réseau distinct du réseau de communication. Les différentes entités peuvent toutefois communiquer entre elles, au moins deux à deux.

Comme illustré en figure 5A, au cours d'une étape 511, le terminal 51 transmet, à destination du premier serveur de résolution de noms 52, au moins un message de résolution de noms via un canal de communication sécurisé entre le terminal 51 et le premier serveur de résolution de noms 52.

Si une redirection du trafic DNS du terminal est autorisée, le terminal 51 obtient 512 au moins un identifiant d'un deuxième serveur de résolution de noms légitime 55 pour la redirection, en provenance du premier serveur de résolution de noms 52 ou d'une entité en communication directe ou indirecte avec le premier serveur de résolution de noms 52 (par exemple un serveur d'autorisation 53 ou un contrôleur de réseau 54).

Le terminal 51 peut alors exécuter 513 au moins une action de gestion de ladite redirection du trafic DNS du terminal vers le deuxième serveur de résolution de noms 55, parmi au moins :
- vérifier la légitimité du deuxième serveur de résolution de noms,
- envoyer une indication d'un échec d'une connexion du terminal avec le deuxième serveur de résolution de noms,
- demander la désactivation de la redirection du trafic DNS vers le deuxième serveur de résolution de noms.

En particulier, pour vérifier la légitimité du deuxième serveur de résolution de noms, le terminal 51 peut émettre une requête de résolution de noms vers l'entité identifiée à partir dudit au moins un identifiant inclus dans le message de redirection (i.e., le deuxième serveur de résolution de noms, si son identité n'est pas usurpée par une autre entité), comme décrit par la suite.

Comme illustré en figure 5B, si une redirection du trafic DNS du terminal est autorisée, le contrôleur de réseau 54 peut notamment échanger 541 des informations avec le deuxième serveur de résolution de noms 55 identifié pour le terminal pour la redirection autorisée du trafic DNS du terminal, pour assister le terminal 51 dans l'exécution des actions de gestion de la redirection du trafic DNS.

Par exemple, le contrôleur 54 peut fournir au deuxième serveur de résolution de noms 55 au moins une information de vérification, par le terminal 51, de la légitimité du deuxième serveur de résolution de noms 55. Le contrôleur 54 peut par ailleurs obtenir, en provenance du deuxième serveur de résolution de noms, au moins une information pour la résolution d'un échec d'une connexion du terminal avec le deuxième serveur de résolution de noms, par exemple un nouvel identifiant du deuxième serveur de résolution de noms.

De façon similaire, si une redirection du trafic DNS du terminal est autorisée, le deuxième serveur de résolution de noms 55, illustré en figure 5C, peut échanger 551 des informations avec le contrôleur de réseau 54, pour assister le terminal 51 dans l'exécution des actions de gestion de la redirection du trafic DNS.

Par exemple, le deuxième serveur de résolutions de noms 55 peut obtenir, en provenance du contrôleur 54, au moins une information de vérification, par le terminal 51, de la légitimité du deuxième serveur de résolution de noms 55. Le deuxième serveur de résolutions de noms 55 peut également fournir au contrôleur de réseau 54 au moins une information pour la résolution d'un échec d'une connexion du terminal avec le deuxième serveur de résolution de noms.

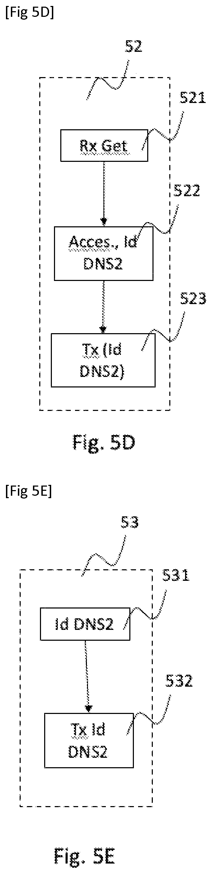

La figure 5D illustre les principales étapes mises en œuvre dans le premier serveur de résolution de noms 52.

Comme illustré en figure 5D, à la réception 521 du message de résolution de noms en provenance du terminal 51, le premier serveur de résolution de noms 52 peut notamment vérifier si une redirection du trafic DNS du terminal est autorisée, par exemple en consultant le serveur d'autorisation 53. Le serveur d'autorisation 53 peut également communiquer avec le contrôleur de réseau 54.

Par exemple, le premier serveur de résolution de noms 52 peut transmettre, à destination du serveur d'autorisation 53, une requête de vérification d'autorisation d'un service de type de redirection, comportant au moins un identifiant du terminal 51 ou un identifiant du réseau auquel le terminal 51 est connecté.

On s'attache ici à décrire le cas où le service est de type redirection. Dans d'autres modes de réalisation, le serveur d'autorisation peut vérifier si le terminal est autorisé à utiliser un profil DNS identifié dans le message de résolution de noms. En effet, plusieurs profils DoH (identifiés par des « URI Templates ») peuvent être supportés par un même serveur de résolution de noms. Chacun de ces profils peut être configuré pour fournir un service DNS différent (avec ou sans filtrage, anti-spam activé, etc.).

Le premier serveur de résolution de noms 52 peut ainsi obtenir 522 une autorisation de redirection pour le terminal et au moins un identifiant d'un deuxième serveur de résolution de noms légitime identifié pour le terminal 51 pour la redirection et transmettre 523, au terminal 51, un message de redirection portant ledit au moins un identifiant d'un deuxième serveur de résolution de noms légitime.

Comme illustré en figure 5E, le serveur d'autorisation 53 peut notamment obtenir 531 au moins un identifiant du deuxième serveur de résolution de noms légitime 55 identifié pour le terminal 51 pour la redirection, par exemple à la réception d'une requête de vérification d'autorisation de service de type redirection en provenance du premier serveur de résolution 52.

En particulier, le serveur d'autorisation 53, après vérifications reposant sur le ou les identifiants du terminal et sur des instructions locales (i.e., instructions de celui qui opère le serveur d'autorisation (par ex. redirection par défaut ou pour un identifiant particulier)), obtient 531 le cas échéant au moins un identifiant d'un deuxième serveur de résolution de noms 55 associé au terminal 51 identifié à partir du ou des identifiants du terminal 51.

Le serveur d'autorisation 53 peut ensuite transmettre 532 à destination du premier serveur de résolution de noms 52, une autorisation de redirection pour le terminal 51 et au moins un identifiant d'un deuxième serveur de résolution de noms 55.

Comme indiqué ci-dessus, ces différentes entités peuvent notamment assister le terminal 51 dans l'exécution d'au moins une action de gestion de la redirection du trafic DNS du terminal vers le deuxième serveur de résolution de noms 55.

On décrit ci-après un premier mode de réalisation selon lequel l'action de gestion de la redirection du trafic DNS est de type vérification de la légitimité du deuxième serveur de résolution de noms.

Selon ce premier mode de réalisation, l'invention propose une solution permettant de détecter si l'entité se présentant comme étant le deuxième serveur de résolution de noms 55 est malveillante. En particulier, il est possible d'interrompre la redirection du trafic en cas de présence avérée d'une entité malveillante. Pour ce faire, une procédure de tests peut être mise en œuvre.

Par exemple, selon ce premier mode de réalisation, l'exécution d'une action de type vérification de la légitimité du deuxième serveur de résolution de noms comprend la transmission, par le terminal 51 au premier serveur de résolution de noms 52, d'un indicateur requérant la vérification de la légitimité du deuxième serveur de résolution de noms. Par exemple, un tel indicateur peut être inséré dans le corps ou l'entête du message de résolution de noms transmis du terminal 51 au premier serveur de résolution de noms 52 au cours de l'étape 511, ou dans un autre message.

A réception de l'indicateur requérant la vérification de la légitimité du deuxième serveur de résolution de noms, le premier serveur de résolution de noms 52 génère au moins une information de vérification de la légitimité du deuxième serveur de résolution de noms, ou interroge le serveur d'autorisation 53 pour obtenir une telle information.

Le premier serveur de résolution de noms 52 peut ainsi transmettre au terminal 51 la ou les informations de vérification de la légitimité du deuxième serveur de résolution de noms, par exemple dans le message de redirection.

De plus, si le premier serveur de résolution de noms 52 a généré la ou les informations de vérification de la légitimité du deuxième serveur de résolution de noms, ces informations peuvent être transmises vers le serveur d'autorisation 53, puis du serveur d'autorisation 53 vers le contrôleur de réseau 54, puis du contrôleur de réseau 54 vers le deuxième serveur de résolution de noms légitime 55.

Si le premier serveur de résolution de noms 52 a reçu la ou les informations de vérification de la légitimité du deuxième serveur de résolution de noms en provenance du serveur d'autorisation 53, ces informations sont directement transmises du serveur d'autorisation 53 vers le contrôleur de réseau 54, puis du contrôleur de réseau 54 vers le deuxième serveur de résolution de noms légitime 55.

En variante, le premier serveur de résolution de noms peut communiquer directement avec le deuxième serveur de résolution de noms légitime 55.

Ainsi, à la fois le terminal 51 et le deuxième serveur de résolution de noms légitime 55 disposent des mêmes informations de vérification de la légitimité du deuxième serveur de résolution de noms. De telles informations comprennent par exemple un ou plusieurs tests de vérification, formés à partir d'au moins une requête DNS et la réponse correspondante.

Le terminal 51 peut ainsi émettre une requête-test à destination de l'entité identifiée à partir du message de redirection, construite à partir du ou des tests de vérification inclus dans le message de redirection.

Le terminal 51 peut alors vérifier la légitimité de l'entité identifiée à partir du message de redirection en comparant la réponse reçue de cette entité avec une réponse-test obtenue par le terminal 51 à partir du ou des tests de vérification inclus dans le message de redirection.

En particulier, si aucune réponse n'est reçue par le terminal 51, ou si une réponse est présentée mais ne correspond pas à celle communiquée par le premier serveur de résolution de noms 52 dans les informations de vérification, le terminal 51 peut conclure que l'entité identifiée à partir du message de redirection, et se présentant comme étant le deuxième serveur de résolution de noms 55, est malveillante.

Par ailleurs, le contrôleur de réseau 54 peut avoir préalablement obtenu le ou les identifiants du terminal 51, en provenance du serveur d'autorisation 53, et les avoir transmis au deuxième serveur de résolution de noms légitime 55.

A réception d'une requête en résolution de noms, le deuxième serveur de résolution de noms légitime 55 peut ainsi vérifier si au moins un identifiant de l'entité émettrice d'une requête de résolution de noms est identique ou corrélé avec le ou les identifiants du terminal ayant émis le message de résolution de noms.

Par identifiants corrélés, on entend ici des identifiants liés par une relation de dépendance (par exemple un identifiant et une version codée de cet identifiant). Par exemple, si l'identifiant de l'entité émettrice de la requête est une adresse formée à partir d'un préfixe (par exemple un préfixe IPv6 /64) alloué au terminal, le deuxième serveur de résolution de noms décide qu'il y a corrélation.

Ainsi, le deuxième serveur de résolution de noms légitime 55 peut notamment vérifier si la requête de résolution de noms utilisée pour la vérification émane du terminal 51 identifié par le contrôleur de réseau 54, et décider de ne traiter la requête de résolution de noms (en construisant une réponse à partir du ou des tests de vérification) que si elle émane bien du terminal 51 identifié par le contrôleur de réseau 54.

On décrit ci-après un deuxième mode de réalisation selon lequel l'action de gestion de la redirection du trafic DNS est de type envoi d'une indication d'un échec d'une connexion du terminal avec le deuxième serveur de résolution de noms.

Selon ce deuxième mode de réalisation, l'invention propose une solution permettant d'établir une connexion avec le deuxième serveur de résolution de noms 55, suite à un échec d'authentification. Pour ce faire, une nouvelle adresse peut être générée pour joindre le deuxième serveur de résolution de noms.

Par exemple, selon ce deuxième mode de réalisation, l'exécution d'une action de type « envoi d'une indication d'un échec d'une connexion du terminal avec le deuxième serveur de résolution de noms » comprend la transmission, par le terminal 51 au premier serveur de résolution de noms 52, d'un indicateur requérant la génération d'au moins un nouvel identifiant du deuxième serveur de résolution de noms 55. Par exemple, un tel indicateur peut être inséré dans le corps ou l'entête du message de résolution de noms transmis du terminal 51 au premier serveur de résolution de noms 52 au cours de l'étape 511, ou dans un autre message. Un tel indicateur peut par exemple être transmis au premier serveur de résolution de noms 52 lorsque le terminal 51 n'arrive pas à authentifier le deuxième serveur de résolution de noms 55 (échec d'authentification).

Dans ce cas, à réception de l'indicateur requérant la génération d'au moins un nouvel identifiant du deuxième serveur de résolution de noms 55, le premier serveur de résolution de noms 52 peut transmettre au serveur d'autorisation 53 une requête de génération d'au moins un nouvel identifiant du deuxième serveur de résolution de noms. Le serveur d'autorisation 53 peut transmettre la requête au contrôleur de réseau 54, qui peut la transmettre à son tour au deuxième serveur de résolution de noms légitime 55. En variante, le premier serveur de résolution de noms peut communiquer directement avec le deuxième serveur de résolution de noms légitime 55.

A réception de cette requête, le deuxième serveur de résolution de noms légitime 55 peut générer au moins un nouvel identifiant, et transmettre au contrôleur de réseau 44 le ou les nouveaux identifiants. Le contrôleur de réseau 54 peut remonter le ou les nouveaux identifiants du deuxième serveur de résolution de noms 55 au serveur d'autorisation 53, qui peut à son tour les remonter au premier serveur de résolution de noms 52. En variante, le deuxième serveur de résolution de noms légitime 55 peut communiquer directement avec le premier serveur de résolution de noms.

Un nouvel identifiant peut être une adresse IP, mais d'autres identifiants peuvent être considérés en variante (nom de domaine, numéro de port ou certificat, par exemple).

Le premier serveur de résolution de noms 52 peut transmettre au terminal 51 le ou les nouveaux identifiants du deuxième serveur de résolution de noms 55, par exemple dans le message de redirection.

Les deux modes de réalisation décrits ci-dessus peuvent être mis en œuvre simultanément ou successivement.

On note par ailleurs que le premier serveur de résolution de noms de domaine, le serveur d'autorisation et/ou le contrôleur de réseau peuvent être une même entité ou des entités distinctes. Les fonctions associées au premier serveur de résolution de noms de domaine, au serveur d'autorisation et/ou au contrôleur de réseau peuvent ainsi être embarquées dans un même nœud ou dans des nœuds distincts.

Par exemple, les échanges entre le terminal 51 et le premier serveur de résolution de noms 52 ou le deuxième serveur de résolution de noms 55 utilisent le protocole DoH. Le terminal 51 est donc un client DoH.

En particulier, le message de résolution de noms peut être un message de type DoH GET, et le message de redirection de type DoH « 3xx » (qu'on appellera dans la suite DoH REDIRECT).

Bien entendu, d'autres protocoles peuvent être utilisés. Par exemple, les échanges DNS peuvent s'appuyer sur des protocoles tel que DoQ, etc.

En particulier, le procédé de redirection de trafic présenté s'applique indépendamment du protocole de transport utilisé par le service de résolution de noms. En particulier, si l'on considère un réseau IP, le protocole de transport utilisé par les communications DNS peut être indifféremment IPv4 ou IPv6 (selon les conditions d'accès au réseau, notamment).

La solution proposée offre ainsi au moins l'un des avantages suivants, selon le mode de réalisation considéré :
- garantir la disponibilité des services offerts aux clients (et notamment les services reposant sur DNS) et éviter la dégradation de la qualité d'expérience perçue par les clients,
- offrir un ensemble de services de résolution de noms fiables et robustes, tout en minimisant les modifications des infrastructures et des protocoles existants requises pour fournir de tels services,
- détecter les attaques et l'interception des données au sein d'un réseau informatique (domestique ou réseau interne d'entreprise) par des équipements malveillants, qui peuvent servir de relais pour de telles attaques,
- permettre à un opérateur de continuer d'offrir des services à valeur ajoutée à ses clients, reposant notamment sur la résolution de noms, incluant l'activation d'un deuxième serveur de résolution de noms, par exemple un « forwarder DNS » hébergé par un CPE,
- améliorer la confiance de l'utilisateur envers l'opérateur auprès duquel il a souscrit de tels services de résolution de noms,
- disposer d'une liste restreinte de serveurs autorisés de « confiance ».

### 5.2 Description d'un mode de réalisation particulier

On décrit ci-après différents exemples de mise en œuvre de l'invention pour la gestion de la redirection du trafic DNS d'un terminal. A titre d'exemple, on considère que le protocole DoH est utilisé pour chiffrer les messages DNS, pour que le terminal et le ou les serveurs de résolution de noms puissent communiquer via un canal sécurisé.

Par la suite, on entend par « serveur DNS légitime » un serveur de résolution de noms déclaré ou configuré par l'opérateur et par exemple hébergé dans le réseau d'accès, mais d'autres serveurs peuvent être considérés (par exemple, serveurs DNS exploités par des tiers).

On entend également par la suite par équipement ou entité « malveillant(e) » une machine du réseau de communication qui usurpe ou annonce des informations permettant d'intercepter le trafic DNS (par exemple, une machine usurpant l'identité d'un serveur DNS légitime ou l'usurpation de l'identité du routeur par défaut via lequel transite le trafic DNS).

On note qu'aucune hypothèse n'est faite quant à la nature de l'équipement malveillant. Il peut s'agir par exemple d'un équipement installé par l'utilisateur, d'un équipement visiteur (par ex. invité), d'un équipement situé dans la zone de couverture du réseau WLAN d'un équipement d'accès au réseau de l'opérateur (CPE), etc.

Le réseau de communication est par exemple un réseau informatique domestique ou un réseau d'entreprise, également appelé réseau local ou LAN.

On considère que l'opérateur du réseau d'accès souhaite mettre en place une procédure de redirection du trafic DNS, par exemple parce que certains services offerts aux terminaux connectés au réseau local requièrent l'activation d'un serveur de résolution de noms dans le réseau local (« forwarder DNS »). Ceci est par exemple le cas de terminaux tels que des objets connectés, des imprimantes, etc.

A titre d'exemple, on considère que ce serveur de résolution de noms, également appelé deuxième serveur de résolution de noms, est hébergé par un CPE, associé à au moins une interface réseau entre le réseau local et le réseau d'accès, et défini comme un routeur par défaut pour les terminaux du réseau local. D'autres routeurs peuvent être déployés dans le réseau local, par exemple un routeur domestique différent du CPE et installé pour segmenter le trafic du LAN entre le trafic privé et le trafic professionnel. Toutefois, le trafic entre le réseau local et le réseau d'accès transitant par le CPE, on considère que le CPE est un routeur par défaut. En variante, le deuxième serveur de résolution de noms peut être une autre entité connectée au réseau local.

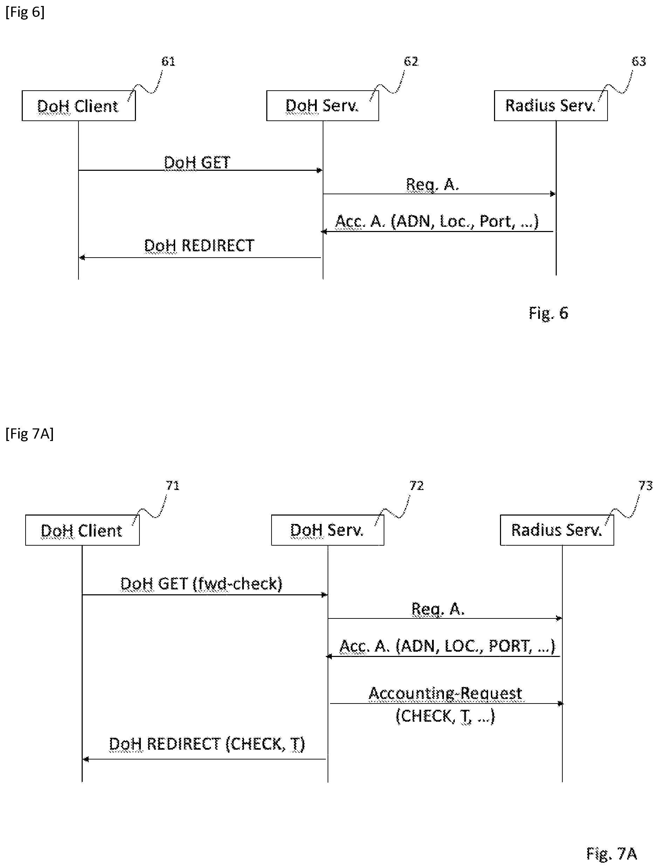

Comme illustré en figure 6, pour mettre en place une procédure de redirection du trafic DNS, un terminal 61 émet un message de résolution de noms vers un premier serveur DoH 62. Par exemple, une telle requête DoH est de type DoH GET ou DoH POST.

A réception de la requête DoH, le premier serveur DoH 62 peut s'interfacer avec un serveur d'autorisation 63 pour récupérer les consignes à appliquer lorsqu'une nouvelle connexion doit être mise en place.

Pour ce faire, le premier serveur DoH 62 transmet au serveur d'autorisation 63 une requête de vérification d'autorisation de redirection, par exemple de type « Access-Request ».

Le serveur d'autorisation 63 peut identifier un deuxième serveur DoH du réseau local (par exemple embarqué dans le CPE) à utiliser pour la redirection du trafic à partir d'au moins un identifiant du terminal, par exemple son adresse IPv4, et/ou un préfixe IPv6 utilisés par le client DoH pour émettre la requête DoH, et/ou l'identifiant DNS du certificat du terminal 61 (DNS-ID), etc.

Par exemple, une base de données des clients actifs est utilisée pour identifier un deuxième serveur DoH. L'opérateur peut notamment maintenir à jour la liste des services et des informations associées.

On suppose donc, selon cet exemple d'implémentation, que le serveur d'autorisation 63 maintient une liste des terminaux / clients DoH éligibles à la redirection du trafic DNS.

Par exemple, un tel serveur d'autorisation 63 est un serveur RADIUS (« Remote Authentication Dial-In User Service » en anglais tel que décrit dans le document RFC 2865, « Remote Authentication Dial In User Service (RADIUS) », C. Rigney et al., juin 2000), et de nouveaux attributs RADIUS sont définis pour identifier un deuxième serveur DoH associé à un client DoH. Par exemple, de tels attributs comprennent un nom de domaine configuré pour le deuxième serveur DoH (ADN ou « Authentication Domain Name » en anglais), au moins une adresse (par exemple une adresse interne) à utiliser pour joindre le deuxième serveur DoH (« Locators » en anglais), éventuellement un numéro de port alternatif (« Port ») pour le service DoH, etc.

Le serveur d'autorisation 63 peut ainsi communiquer ces différentes informations (nom de domaine, adresses, numéro de port alternatif, etc.) au premier serveur DoH 62, en réponse à la requête de vérification d'autorisation de redirection, par exemple dans un message de type « Access-Accept ». En particulier, les adresses/numéro de port peuvent être communiqués dans la réponse en plus du nom de domaine de façon à éviter qu'un client DoH sollicite un autre serveur (qui peut être malveillant) pour la résolution de ce nom de domaine.

Le premier serveur DoH 62 peut notamment relayer ces informations vers le terminal 61 dans un message « DoH REDIRECT ».

Le terminal 61 peut ainsi procéder à la redirection des requêtes DNS vers le deuxième serveur DoH (par exemple un « forwarder DNS » embarqué dans le CPE) et à l'établissement d'une session DoH avec le deuxième serveur DoH.

Le terminal 61 peut notamment exécuter au moins une action de gestion de la redirection du trafic DNS du terminal vers le deuxième serveur de résolution de noms, notamment s'il détecte un problème d'authentification ou s'il a des doutes sur la légitimité du deuxième serveur DoH

Selon le premier mode de réalisation décrit précédemment, le terminal peut notamment exécuter une action de type vérification de la légitimité dudit deuxième serveur de résolution de noms.

Ainsi, lors de l'initialisation de la redirection du trafic ou suite à la mise en place de la redirection du trafic DNS vers le deuxième serveur DoH, le terminal peut procéder à la vérification de la légitimité du deuxième serveur DoH. En effet, le terminal peut soupçonner une entité qui se présente comme étant le deuxième serveur DoH d'être malveillante et éviter que les requêtes DNS que le terminal émet ne soient redirigées vers une telle entité s'il s'avère qu'elle est malveillante.

Dans ce cas, comme illustré en figure 7A, le terminal 71 peut transmettre au premier serveur DoH 72 un indicateur requérant la vérification de la légitimité du deuxième serveur DoH.

Par exemple, le terminal 71 insère un nouvel objet (« fwd-check ») dans l'en-tête d'un message de résolution DoH GET (ou dans le corps du message DoH POST) pour indiquer au premier serveur DoH 72 qu'il souhaite mettre en place une procédure de vérification de la légitimité du deuxième serveur DoH.

A réception de cette requête DoH GET (fw-check), qui inclut l'objet « fwd-check », le premier serveur DoH 72 sollicite le serveur d'autorisation 73 pour vérifier si la redirection est activée pour ce client, par exemple en transmettant une requête de vérification d'autorisation de redirection de type « Access-Request » comme décrit précédemment. Le serveur d'autorisation 73 peut répondre en transmettant une réponse de type « Access-Accept » comme décrit précédemment.

Le premier serveur DoH 72 informe également le serveur d'autorisation 73 qu'il va mettre en place une procédure de vérification coordonnée avec le terminal 72. Par exemple, le premier serveur DoH 72 peut transmettre au serveur d'autorisation 73 au moins une information de vérification de la légitimité du deuxième serveur DoH, par exemple dans un message de type « Accounting-Request ». Le premier serveur DoH 72 peut ainsi communiquer au serveur d'autorisation 73 les informations descriptives d'au moins un test (« CHECK ») ainsi qu'éventuellement une échéance (« T ») pour l'exécution du test par le terminal 71.

Par exemple, chaque test est une entrée DNS unique qui n'est connue que de l'opérateur, et donc du premier serveur DoH 72. Un test peut être défini à l'aide d'un type, d'une requête DNS (« check-query ») et d'une réponse associée (« check-reply »).

Le serveur d'autorisation 73 transmet alors à un contrôleur de réseau au moins un identifiant du terminal 71 ainsi que les informations de vérification de la légitimité du deuxième serveur DoH (informations descriptives d'au moins un test (« CHECK ») ainsi qu'éventuellement une échéance (« T ») pour l'exécution du test par le terminal 71). Par exemple, un tel contrôleur de réseau est le serveur d'auto-configuration (en anglais « Auto-Configuration Server (ACS) ») du protocole CWMP.

Par exemple, les informations de vérification de la légitimité du deuxième serveur DoH sont formatées selon une sémantique YANG.

Un exemple de structure arborescente (« tree structure » en anglais) du module YANG utilisée par le serveur d'autorisation 73 et le contrôleur de réseau est donné en annexe.

Si le deuxième serveur DoH n'est pas hébergé par le CPE, le serveur d'autorisation 73 transmet également au moins un identifiant du deuxième serveur DoH. On note que si le deuxième serveur DoH est hébergé par le CPE, le contrôleur de réseau peut directement obtenir le ou les identifiants du deuxième serveur DoH à partir des informations à sa disposition.

Le contrôleur de réseau, également appelé orchestrateur, transmet au deuxième serveur DoH légitime les informations de vérification de la légitimité du deuxième serveur DoH (informations descriptives d'au moins un test (« CHECK ») ainsi qu'éventuellement une échéance (« T ») pour la mise en œuvre du test).

Le contrôleur de réseau transmet également au deuxième serveur DoH légitime au moins un identifiant du terminal 71 concerné par la procédure de vérification.

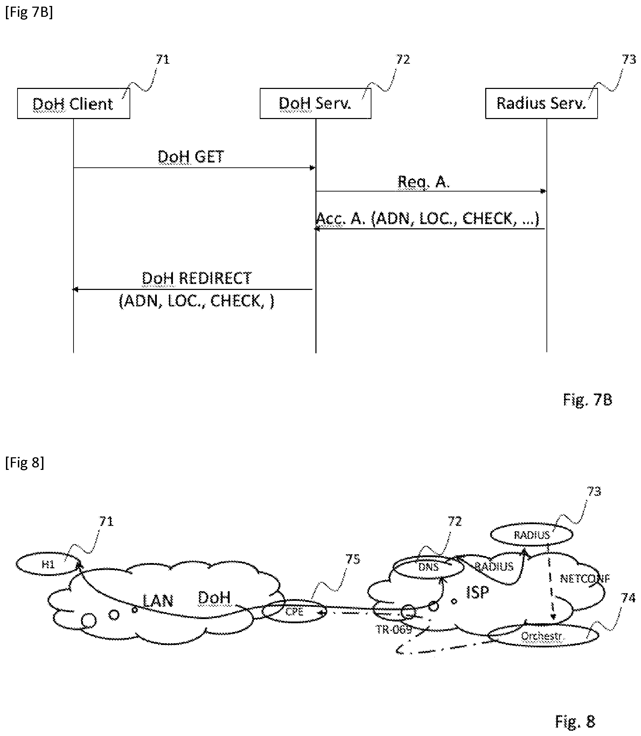

Comme illustré en figure 8, les échanges entre le serveur d'autorisation 73 et le contrôleur de réseau 74 peuvent être mis en œuvre dans un canal de communication sécurisé, par exemple selon les protocoles NETCONF ou RESTCONF. Les échanges entre le contrôleur de réseau 74 et le deuxième serveur DoH 75 peuvent également être mis en œuvre dans un canal de communication sécurisé, par exemple selon les protocoles NETCONF ou RESTCONF (tels que décrits dans le document RFC8071 (« NETCONF Call Home and RESTCONF Call Home », K. Wasten, février 2017) ou TR-069 (CWMP pour « CPE WAN Management Protocol »)).

De la même façon, le premier serveur DoH 72 peut communiquer au terminal 71 les informations de vérification de la légitimité du deuxième serveur DoH, par exemple dans le message de redirection DoH REDIRECT (CHECK, T).

Un exemple d'objet JSON utilisé par le premier serveur DoH 72 pour communiquer au terminal 71 les informations de vérification est présenté en annexe.

Par rapport à l'exemple donné en art antérieur, un tel objet JSON décrit donc un test à mettre en œuvre pour vérifier la légitimité du deuxième serveur DoH, notamment un type de test (« check-rrtype »), une requête-test (« check-query »), et une réponse à la requête-test (« check-reply »). « check-rrtype » indique un type de ressource DNS (« Resource Records Type », en anglais).

Selon l'exemple ci-dessus, à réception de ce message de redirection, et après 5s (échéance définie dans le « timer »), le terminal 71 émet une requête-test de type « txt » pour le nom de domaine « test47fsgugsdf4zjou.defhiyef.isp » (« check-query »), en utilisant l'identifiant du deuxième serveur DoH reçue du premier serveur DoH 72.

L'entité qui reçoit cette requête-test procède au traitement de la requête.

Si l'entité recevant cette requête construit une réponse, l'envoie au terminal 71, et que cette réponse correspond à celle communiquée directement par le premier serveur DoH 72 (« check-reply »), le terminal 71 conclut que cette entité est bien le deuxième serveur DoH légitime.

Si l'entité recevant cette requête est malveillante, par exemple parce qu'elle a usurpé l'identité du deuxième serveur DoH, elle peut adopter plusieurs stratégies :
- émuler une réponse et l'envoyer au terminal 71 : la probabilité que cette réponse corresponde à celle communiquée directement par le premier serveur DoH 72 (« check-reply ») est quasi nulle. Le terminal 71 détecte alors une incohérence dans la réponse reçue, et considère que l'entité ayant reçu la requête de résolution de noms ;
- relayer la requête vers le serveur nominal (c'est-à-dire, celui configuré par le réseau local) : une réponse négative sera envoyée car seul le deuxième serveur DoH légitime dispose de la réponse ;
- relayer la requête vers le deuxième serveur DoH légitime : une réponse négative sera alors envoyée par le deuxième serveur DoH, car le deuxième serveur DoH peut vérifier si la requête de résolution de noms émane bien du terminal, à partir du ou des identifiants du terminal reçus du contrôleur de réseau (par exemple, en appliquant des filtres sur la base d'au moins un identifiant du terminal) ;
- relayer la requête vers un autre serveur malveillant : une réponse négative sera envoyée.

Si aucune réponse à la requête-test (« check-query ») n'est reçue par le terminal 71, ou si une réponse est présentée mais la réponse ne correspond pas à celle communiquée directement par le premier serveur DoH légitime (« check-reply »), alors le terminal 71 conclut que l'entité joignable en utilisant l'identifiant du deuxième serveur DoH reçue du premier serveur DoH 72 est malveillante, et il peut alors mettre en place une procédure permettant de désactiver la redirection locale du trafic.

Selon une variante illustrée en figure 7B, il est également possible de vérifier la légitimité du deuxième serveur DoH par défaut, par exemple à l'initialisation de la redirection du trafic ou au démarrage du deuxième serveur DoH.

Dans ce cas, comme illustré en figure 7B, à réception d'un message de résolution de noms émis par le terminal 71, le premier serveur DoH 72 sollicite le serveur d'autorisation 73 pour vérifier si la redirection est activée pour ce client, par exemple en transmettant une requête de vérification d'autorisation de redirection de type « Access-Request » comme décrit précédemment. Le serveur d'autorisation 73 peut répondre en transmettant une réponse de type « Access-Accept », comportant par exemple au moins une information de vérification de la légitimité du deuxième serveur DoH, par exemple les informations descriptives d'au moins un test (« CHECK ») tel que décrit précédemment.

Le premier serveur DoH 72 peut communiquer au terminal 71 les informations de redirection (ADN, LOCATORS, PORT, etc.) ainsi que les informations de vérification de la légitimité du deuxième serveur DoH, par exemple dans le message de redirection DoH REDIRECT (CHECK).

Si le terminal 71 détecte une anomalie lors de l'exécution de la procédure de vérification (ou lors de l'authentification du deuxième serveur comme décrit ci-après), il peut mettre en place une procédure permettant de désactiver la redirection locale du trafic.

Selon le deuxième mode de réalisation décrit précédemment, le terminal peut également exécuter une action de type envoi d'une indication d'un échec d'une connexion du terminal avec le deuxième serveur de résolution de noms.

Par exemple, lors de l'initialisation de la redirection du trafic, le terminal peut détecter que la procédure d'authentification du deuxième serveur DoH a échoué. Dans ce cas, la connexion ne peut pas être établie entre le terminal et le deuxième serveur DoH. Aucun service n'est donc disponible localement pour le terminal.

Ce deuxième mode de réalisation peut éventuellement être mis en œuvre suite au premier mode de réalisation, par exemple suite à l'émission d'une requête de résolution de noms par le terminal. En particulier, l'échec de l'authentification peut être dû à la présence d'un serveur malveillant qui usurpe l'identité (par exemple son adresse IP) du deuxième serveur DoH.

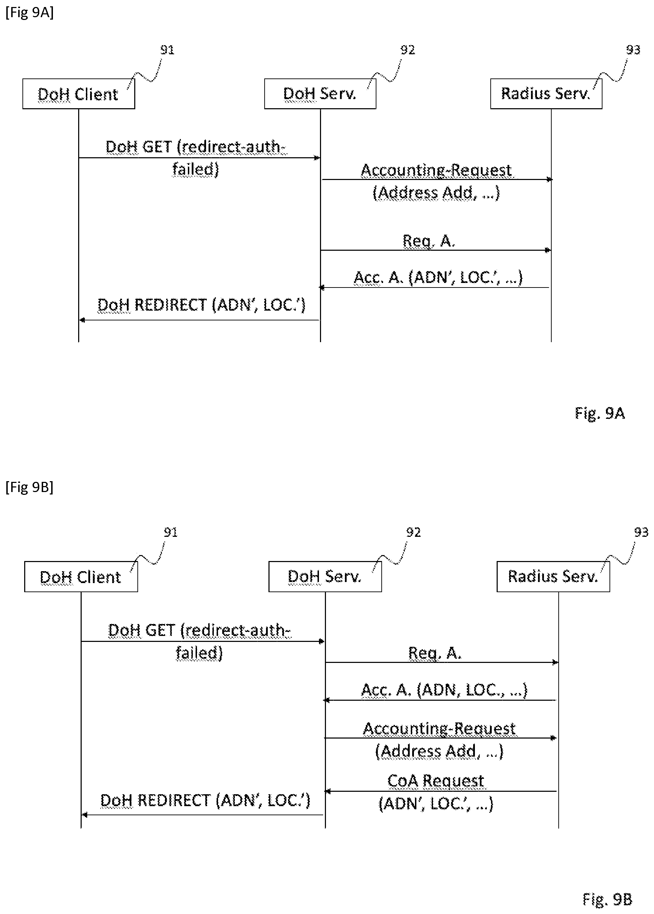

Dans ce cas, comme illustré en figures 9A et 9B, le terminal 91 peut transmettre au premier serveur DoH 92 un indicateur requérant la génération d'au moins un nouvel identifiant du deuxième serveur de résolution de noms.

Par exemple, le terminal 91 insère un nouvel objet (« redirect-auth-failed ») dans l'en-tête d'un message de résolution DoH GET (ou dans le corps du message DoH POST) pour indiquer au premier serveur DoH 92 qu'il souhaite mettre en place une procédure de vérification de l'identité du deuxième serveur DoH, car l'authentification du deuxième serveur DoH a échoué.

Après la réception de cette requête DoH GET (redirect-auth-failed), qui inclut l'objet « redirect-auth-failed », le premier serveur DoH 92 transmet au serveur d'autorisation 93 une requête de génération d'au moins un nouvel identifiant du deuxième serveur de résolution de noms, pour l'informer qu'il souhaite mettre en place une procédure d'ajout d'une nouvelle adresse pour joindre le deuxième serveur de résolution de noms. Par exemple, une telle requête est un message « Accounting-Request » comportant un nouvel attribut « Address Add ».

Le serveur d'autorisation 93 transmet la requête de génération d'au moins un nouvel identifiant du deuxième serveur de résolution de noms au contrôleur de réseau, qui la transmet à son tour au deuxième serveur DoH légitime si le deuxième serveur DoH est hébergé dans un routeur par défaut défini pour le réseau (par exemple un CPE), ou au routeur par défaut sinon. A réception de cette requête, le routeur par défaut (qui peut être le deuxième serveur DoH légitime) peut générer au moins une nouvelle adresse (utilisée localement pour le service DNS, en particulier).

En particulier, le contrôleur de réseau informe le routeur par défaut (qui peut être le deuxième serveur DoH légitime) que cette adresse ne doit être annoncée qu'au terminal identifié.

Par exemple, les échanges entre le serveur d'autorisation 93 et le contrôleur de réseau pour la fourniture d'un nouvel identifiant du deuxième serveur DoH utilisé par les services DNS et non annoncé sur le LAN peut être formatée selon une sémantique YANG.

Un exemple de structure du module YANG utilisé à cet effet est présenté en annexe.

Comme décrit dans le module, un ou plusieurs nouveaux identifiants (« new-address ») peuvent être générés par le routeur par défaut. Le type de l'action est indiqué par l'attribut « type ».

Le ou les nouveaux identifiants sont ensuite remontés au contrôleur de réseau, qui les transmet au serveur d'autorisation 93. Par exemple, comme illustré en figure 8, les échanges entre le serveur d'autorisation 93 et le contrôleur de réseau peuvent être mis en œuvre dans un canal de communication sécurisé, par exemple selon les protocoles NETCONF ou RESTCONF, et les échanges entre le contrôleur de réseau et le deuxième serveur DoH ou le routeur par défaut peuvent être mis en œuvre dans un canal de communication sécurisé, par exemple selon les protocoles NETCONF, RESTCONF, ou TR-069.

Un nouveau nom de domaine, ADN', peut être configuré par le serveur d'autorisation 93 pour le deuxième serveur DoH associé au nouvel identifiant (LOC') à utiliser pour joindre le deuxième serveur DoH. Éventuellement, un certificat d'authentification peut être créé. D'autres informations (par exemple « URI Template ») peuvent aussi être modifiées.

Selon une première variante illustrée en figure 9A, le premier serveur DoH 92 transmet au serveur d'autorisation 93 la requête « Accounting-Request » de génération d'au moins un nouvel identifiant du deuxième serveur de résolution de noms suite à la réception de la requête DoH GET(redirect-auth-failed).

Le premier serveur DoH 92 transmet également au serveur d'autorisation 93 une requête de vérification d'autorisation de redirection de type « Access-Request » comme décrit précédemment.

Le serveur d'autorisation 93 peut transmettre au premier serveur DoH 92 les nouvelles informations (nouveau nom de domaine ADN', nouveaux identifiant du deuxième serveur DoH LOC', etc.) dans la réponse de type « Access-Accept » décrite précédemment.

Selon une deuxième variante illustrée en figure 9B, le premier serveur DoH 92 transmet au serveur d'autorisation 93 une requête de vérification d'autorisation de redirection de type « Access-Request » comme décrit précédemment, à réception de la requête DoH GET (redirect-auth-failed).

Le serveur d'autorisation 93 peut répondre en transmettant une réponse de type « Access-Accept » comme décrit précédemment en relation avec les figures 6 et 7.

Le premier serveur DoH 92 peut alors transmettre au serveur d'autorisation 93 la requête « Accounting-Request » de génération d'au moins un nouvel identifiant du deuxième serveur de résolution de noms.

Le serveur d'autorisation 93 peut répondre en transmettant au premier serveur DoH 92 les nouvelles informations (ADN', LOC', ...), par exemple dans une requête de changement d'autorisation (CoA, « Change of Authorization »).

A l'issue de ces échanges (selon la première ou deuxième variante, ou toute autre variante permettant au premier serveur DoH 92 d'obtenir les nouvelles informations (ADN', LOC', ...), les nouvelles informations de redirection (ADN', LOC', ...) sont communiquées au terminal 91, par exemple dans le message de redirection DoH REDIRECT.

Un exemple d'objet JSON utilisé par le premier serveur DoH 92 pour communiquer au terminal 91 les nouvelles informations de redirection est présenté en annexe.

Par rapport à l'exemple donné en art antérieur, un tel objet JSON décrit donc de nouvelles adresses à utiliser pour communiquer avec le deuxième serveur DoH.

Selon l'exemple ci-dessus, à réception de ce message de redirection, le terminal 91 peut émettre une requête de résolution de noms en utilisant le ou les nouveaux identifiants du deuxième serveur DoH reçu(s) du premier serveur DoH 92, i.e., les nouvelles adresses « 192.0.2.5 » ou « 2001:db8::5 », en utilisant éventuellement le nouveau nom de domaine ADN'.

Si aucun problème de connectivité n'est rencontré par le terminal 91 lors de l'établissement de la connexion, aucune action supplémentaire n'est requise.

Sinon, le terminal 91 peut rétablir la connexion avec le serveur DNS de l'opérateur (premier serveur DoH 92) et indiquer au premier serveur DoH 92 que la migration (pour rediriger le trafic DNS vers le deuxième serveur DoH) a échoué.

En particulier, le terminal 91 peut mettre en place une procédure permettant de désactiver la redirection locale du trafic.

Ainsi, quel que soit le mode de réalisation, le terminal peut mettre en place une procédure permettant de désactiver la redirection locale du trafic, par exemple s'il détecte la présence d'un serveur malveillant et/ou s'il détecte un problème d'authentification/connectivité avec le deuxième serveur DoH.

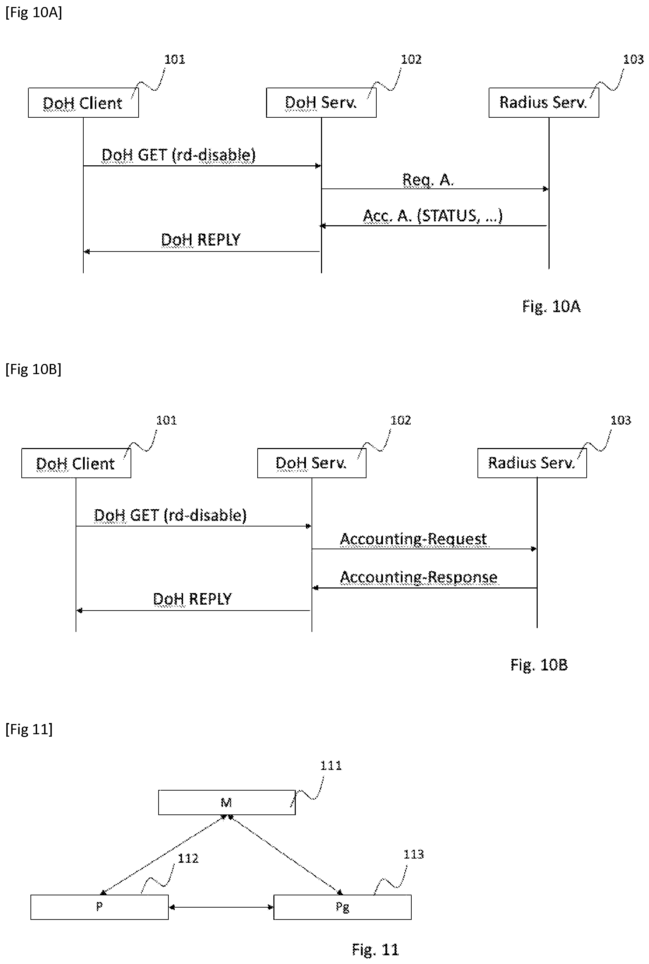

Dans ce cas, comme illustré en figures 10A et 10B, le terminal 101 peut transmettre au premier serveur DoH 102 un indicateur requérant la désactivation de la redirection du trafic vers le deuxième serveur DoH.

Par exemple, le terminal 101 insère un nouvel objet (« rd-disable») dans un message de résolution DoH GET pour indiquer au premier serveur DoH 102 qu'il souhaite mettre en place une procédure de désactivation de la redirection du trafic. On note que de telles requêtes DoH GET ne sont pas traitées localement mais par le premier serveur DoH fourni par le réseau. Ces échanges ne peuvent donc pas être interceptés par un serveur local malveillant.

A réception de cette requête DoH GET (rd-disable), le premier serveur DoH 102 contacte le serveur d'autorisation 103 pour soit lui demander l'autorisation avant de procéder à la désactivation de la redirection, soit l'informer de la désactivation de la redirection pour le terminal 101.

Selon une première variante illustrée en figure 10A, le premier serveur DoH 102 demande l'autorisation du serveur d'autorisation 103 avant de procéder à la désactivation, par exemple dans le message « Access-Request ».

Le serveur d'autorisation 103 peut répondre en envoyant un message de type « Access-Accept » comportant un nouvel attribut STATUS.

Selon une deuxième variante illustrée en figure 10B, le premier serveur DoH 102 informe le serveur d'autorisation 103 de la désactivation de la redirection du trafic pour le terminal 101, par exemple dans le message « Accounting-Request ».

Dans les différents modes de réalisation / variantes décrits ci-dessus, le serveur d'autorisation 53, 63, 73, 93, 103 peut être un serveur RADIUS.

Les formats des nouveaux attributs RADIUS sont par exemple :
- pour l'attribut « ADN » : 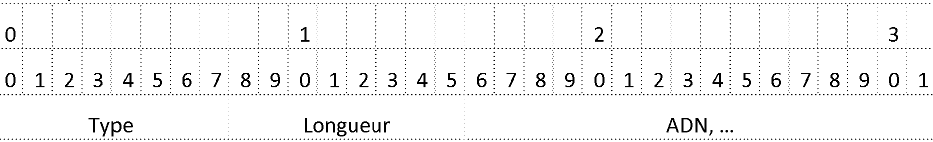
- pour l'attribut « LOCATOR » : 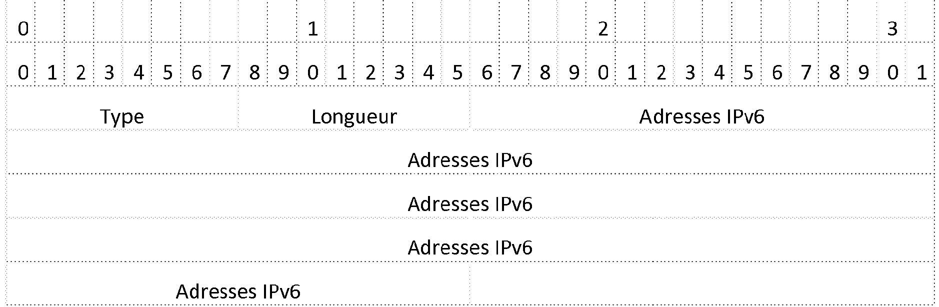
- pour l'attribut « PORT » : 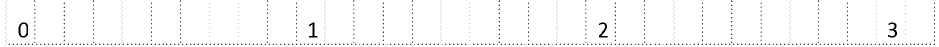 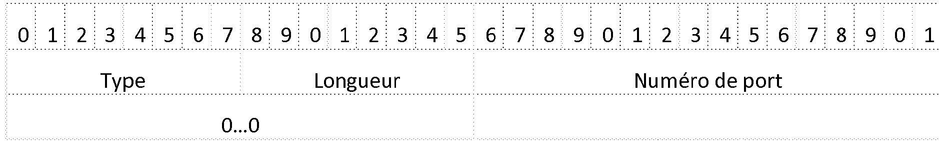
- pour l'attribut « CHECK »: 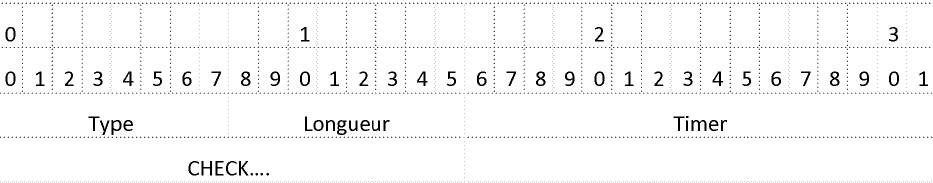
- pour l'attribut « Address Add » : 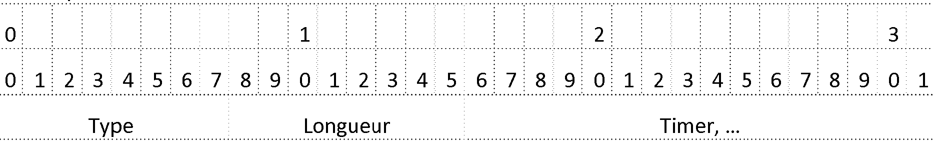
- pour l'attribut « STATUS » :

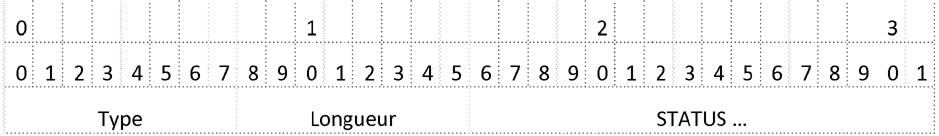

On a décrit ci-dessus un exemple de mise en œuvre selon lequel le deuxième serveur de résolution de noms légitime est un routeur par défaut défini pour le réseau local, par exemple un CPE.

Bien entendu, il s'agit d'un simple exemple, et le deuxième serveur de résolution de noms peut être embarqué dans un terminal du réseau local, une clé, etc., permettant éventuellement un partage de connexion pour accéder au réseau local, configuré(e) par un utilisateur avec l'identité de son routeur par défaut ainsi qu'une liste de serveurs DNS légitimes (notamment le premier serveur de résolution de noms).

On note par ailleurs que la procédure décrite ci-dessus peut être activée/désactivée par un utilisateur ou administrateur d'une entité du réseau local. Le mécanisme de demande d'activation ou de désactivation peut être notamment exécuté lors de l'installation du CPE, lors d'une connexion à l'interface de gestion du CPE, via une notification envoyée par l'opérateur, etc.

### 5.3 Structure simplifiée des différentes entités

On présente finalement, en relation avec la figure 11, les structures simplifiées d'une entité, par exemple un terminal, un premier serveur de résolution de noms, un deuxième serveur de résolution de noms, serveur d'autorisation, ou un contrôleur de réseau selon au moins un mode de réalisation décrit ci-dessus.

Comme illustré en figure 11, une telle entité comprend au moins une mémoire 111 comprenant une mémoire tampon, au moins une unité de traitement 112, équipée par exemple d'une machine de calcul programmable ou d'une machine de calcul dédiée, par exemple un processeur P, et pilotée par le programme d'ordinateur 113, mettant en œuvre des étapes d'au moins un procédé selon au moins un mode de réalisation de l'invention.

A l'initialisation, les instructions de code du programme d'ordinateur 113 sont par exemple chargées dans une mémoire RAM avant d'être exécutées par le processeur de l'unité de traitement 112.

Si l'entité est un terminal, le processeur de l'unité de traitement 112 met en œuvre des étapes du procédé de résolution de noms décrit précédemment, selon les instructions du programme d'ordinateur 113, pour :
- transmettre, à destination d'un premier serveur de résolution de noms, un message de résolution de noms via un canal de communication sécurisé entre ledit terminal et ledit premier serveur de résolution de noms,
- obtenir au moins un identifiant d'un deuxième serveur de résolution de noms pour ladite redirection,
- exécuter au moins une action de gestion de ladite redirection du trafic DNS du terminal vers le deuxième serveur de résolution de noms, parmi au moins :
   - vérifier la légitimité dudit deuxième serveur de résolution de noms,
   - envoyer une indication d'un échec d'une connexion du terminal avec ledit deuxième serveur de résolution de noms,
   - demander la désactivation de ladite redirection du trafic DNS vers ledit deuxième serveur de résolution de noms.

Si l'entité est un premier serveur de résolution de noms, le processeur de l'unité de traitement 112 met en œuvre des étapes du procédé de traitement d'une redirection d'un trafic DNS autorisée pour un terminal décrit précédemment, selon les instructions du programme d'ordinateur 113, pour :
- recevoir un message de résolution de noms en provenance dudit terminal, via un canal de communication sécurisé entre ledit terminal et ledit premier serveur de résolution de noms,
- obtenir, en provenance d'un serveur d'autorisation, une autorisation de redirection pour ledit terminal et au moins un identifiant d'un deuxième serveur de résolution de noms identifié pour ledit terminal pour ladite redirection, et
- transmettre, audit terminal, un message de redirection portant ledit au moins un identifiant d'un deuxième serveur de résolution de noms.

Si l'entité est un deuxième serveur de résolution de noms, le processeur de l'unité de traitement 112 met en œuvre des étapes du procédé de gestion d'une redirection d'un trafic DNS autorisée pour un terminal décrit précédemment, selon les instructions du programme d'ordinateur 113, pour :
- échanger des informations avec un contrôleur du réseau, lesdites informations comprenant au moins une information, fournie par le contrôleur au deuxième serveur de résolution de noms, de vérification par ledit terminal de la légitimité du deuxième serveur de résolution de noms et/ou au moins une information, fournie par le deuxième serveur de résolution de noms au contrôleur, pour la résolution d'un échec d'une connexion du terminal avec le deuxième serveur de résolution de noms.

Si l'entité est un serveur d'autorisation, le processeur de l'unité de traitement 112 met en œuvre des étapes du procédé d'autorisation d'une redirection d'un trafic DNS d'un terminal décrit précédemment, selon les instructions du programme d'ordinateur 113, pour :
- obtenir au moins un identifiant d'un deuxième serveur de résolution de noms identifié pour ledit terminal pour ladite redirection, et
- transmettre, à destination dudit premier serveur de résolution de noms, une autorisation de redirection pour ledit terminal et dudit au moins un identifiant d'un deuxième serveur de résolution de noms.

Si l'entité est un contrôleur de réseau, le processeur de l'unité de traitement 112 met en œuvre des étapes du procédé de contrôle d'une redirection d'un trafic DNS autorisée pour un terminal décrit précédemment, selon les instructions du programme d'ordinateur 113, pour :
- échanger des informations avec un deuxième serveur de résolution de noms identifié pour le terminal pour ladite redirection autorisée du trafic DNS du terminal, lesdites informations comprenant au moins une information, fournie par le contrôleur au deuxième serveur de résolution de noms, de vérification par ledit terminal de la légitimité du deuxième serveur de résolution de noms et/ou au moins une information, fournie par le deuxième serveur de résolution de noms au contrôleur, pour la résolution d'un échec d'une connexion du terminal avec le deuxième serveur de résolution de noms.

### ANNEXE

Un exemple d'objet JSON retourné par le serveur DoH 32 de l'opérateur est :

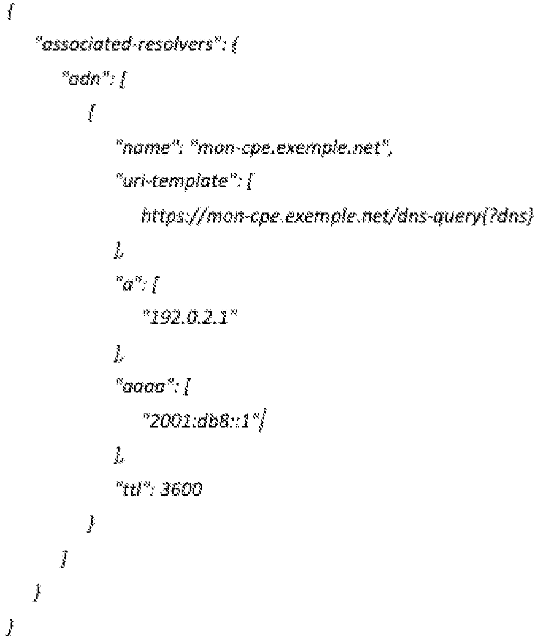

Un exemple de structure arborescente du module YANG utilisée par le serveur d'autorisation 73 et le contrôleur de réseau est : 1

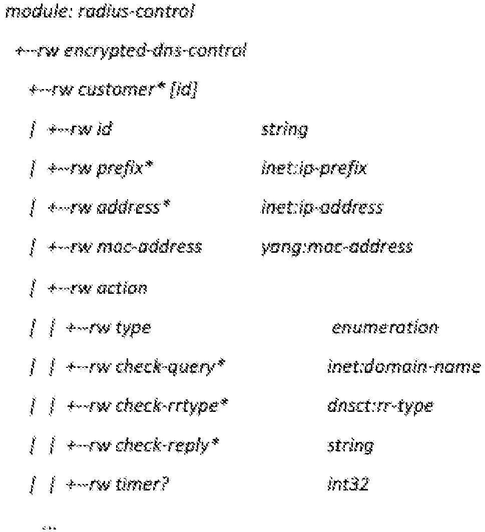

Un exemple d'objet JSON utilisé par le premier serveur DoH 72 pour communiquer au terminal 71 les informations de vérification est :

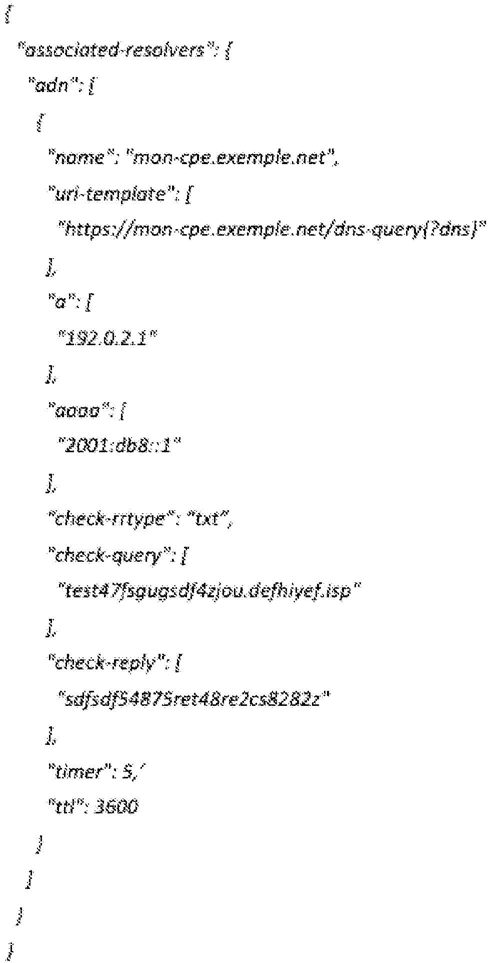

Un exemple de structure du module YANG utilisé pour les échanges entre le serveur d'autorisation 93 et le contrôleur de réseau pour la fourniture d'un nouvel identifiant du deuxième serveur DoH utilisé par les services DNS, et non annoncé sur le LAN, est :

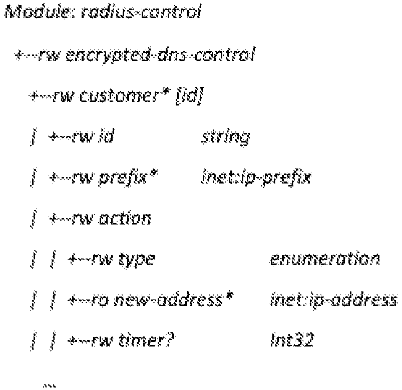

Un exemple d'objet JSON utilisé par le premier serveur DoH 92 pour communiquer au terminal 91 les nouvelles informations de redirection est :

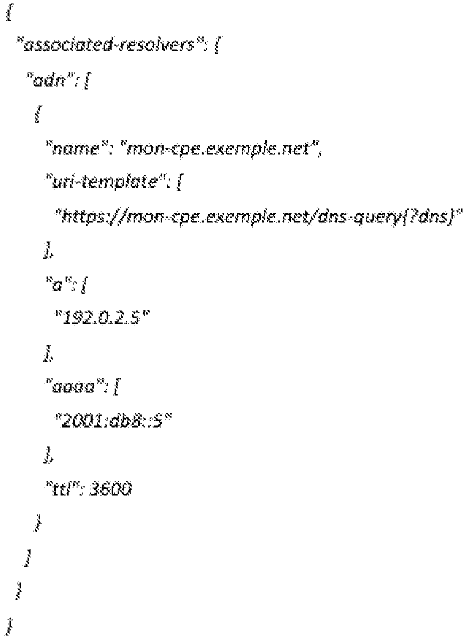

## Revendications

1. Procédé de résolution de noms, mis en œuvre dans un terminal (51) connecté à un réseau de communication, **caractérisé en ce qu'**il comprend :
- la transmission (511), à destination d'un premier serveur de résolution de noms (52), d'un message de résolution de noms via un canal de communication sécurisé entre ledit terminal (51) et ledit premier serveur de résolution de noms (52),
- si une redirection du trafic DNS du terminal est autorisée, l'obtention (512) d'au moins un identifiant d'un deuxième serveur de résolution de noms (55) pour ladite redirection,
- l'exécution (513) d'au moins une action de gestion de ladite redirection du trafic DNS du terminal vers le deuxième serveur de résolution de noms (55), parmi au moins :
- vérifier la légitimité dudit deuxième serveur de résolution de noms,
- envoyer une indication d'un échec d'une connexion du terminal avec ledit deuxième serveur de résolution de noms,
- demander la désactivation de ladite redirection du trafic DNS vers ledit deuxième serveur de résolution de noms.

2. Procédé selon la revendication 1, **caractérisé en ce que** l'envoi d'une indication d'un échec d'une connexion du terminal avec ledit deuxième serveur de résolution de noms engendre en outre l'obtention d'un nouvel identifiant du deuxième serveur de résolution de noms.

3. Procédé selon l'une quelconque des revendications 1 et 2, **caractérisé en ce que** vérifier la légitimité du deuxième serveur de résolution de noms comprend :
- la réception d'au moins une information de vérification de la légitimité dudit deuxième serveur de résolution de noms,
- la vérification de la légitimité d'une entité émettrice d'une réponse à une requête de résolution de noms, émise par ledit terminal et générée à partir de ladite moins une information de vérification, par comparaison de ladite réponse avec une réponse-test obtenue à partir de ladite au moins une information de vérification.

4. Procédé de contrôle d'une redirection d'un trafic DNS autorisée pour un terminal (51) dans un réseau de communication, ledit terminal ayant émis un message de résolution de noms via un canal de communication sécurisé entre ledit terminal (51) et un premier serveur de résolution de noms (52), ledit procédé de contrôle étant mis en œuvre dans un contrôleur (54) dudit réseau et étant **caractérisé en ce qu'**il comprend :
- l'échange (541) d'informations avec un deuxième serveur de résolution de noms (55) identifié pour le terminal pour ladite redirection autorisée du trafic DNS du terminal, lesdites informations comprenant au moins une information, fournie par le contrôleur au deuxième serveur de résolution de noms, de vérification par ledit terminal de la légitimité du deuxième serveur de résolution de noms et/ou au moins une information, fournie par le deuxième serveur de résolution de noms au contrôleur, pour la résolution d'un échec d'une connexion du terminal avec le deuxième serveur de résolution de noms.

5. Procédé selon la revendication 4, **caractérisé en ce qu'**au moins une desdites informations fournies par le deuxième serveur de résolution de noms pour la résolution d'un échec d'une connexion du terminal avec le deuxième serveur de résolution de noms comprend au moins un nouvel identifiant dudit deuxième serveur de résolution de noms, ledit procédé comprenant en outre la transmission, à un serveur d'autorisation du réseau, dudit au moins un nouvel identifiant.

6. Procédé selon la revendication 4, **caractérisé en ce qu'**il comprend l'obtention, en provenance d'un routeur par défaut défini pour le réseau de communication, d'au moins un nouvel identifiant dudit deuxième serveur de résolution de noms, et la transmission, à un serveur d'autorisation du réseau, dudit au moins un nouvel identifiant.

7. Procédé selon l'une quelconque des revendications 4 à 6, **caractérisé en ce qu'**il comprend, lors dudit échange d'informations, la transmission audit deuxième serveur de résolution de noms d'au moins un identifiant dudit terminal autorisé à vérifier la légitimité du deuxième serveur de résolution de noms, ou d'au moins un identifiant d'un réseau auquel appartient ledit terminal.

8. Procédé de gestion d'une redirection d'un trafic DNS autorisée pour un terminal (51) dans un réseau de communication, ledit terminal ayant émis un message de résolution de noms via un canal de communication sécurisé entre ledit terminal (51) et un premier serveur de résolution de noms (52), ledit procédé de gestion étant mis en œuvre dans un deuxième serveur de résolution de noms (55) dudit réseau identifié pour ledit terminal pour ladite redirection, **caractérisé en ce qu'**il comprend :
- l'échange (551) d'informations avec un contrôleur du réseau, lesdites informations comprenant au moins une information, fournie par le contrôleur au deuxième serveur de résolution de noms, de vérification par ledit terminal de la légitimité du deuxième serveur de résolution de noms et/ou au moins une information, fournie par le deuxième serveur de résolution de noms au contrôleur, pour la résolution d'un échec d'une connexion du terminal avec le deuxième serveur de résolution de noms.

9. Procédé selon la revendication 8, **caractérisé en ce qu'**il comprend la transmission audit terminal d'une réponse à une requête de résolution de noms, ladite réponse portant une réponse-test obtenue à partir d'au moins un identifiant du terminal et de ladite au moins une information de vérification de la légitimité dudit deuxième serveur de résolution de noms obtenue lors de l'échange avec le contrôleur.

10. Procédé selon l'une quelconque des revendications 8 et 9, **caractérisé en ce qu'**il comprend :
- la génération d'au moins un nouvel identifiant dudit deuxième serveur de résolution de noms,
- la transmission, audit contrôleur de réseau, dudit au moins un nouvel identifiant lors de l'échange avec ledit contrôleur.

11. Procédé de traitement d'une redirection d'un trafic DNS autorisée pour un terminal (51) dans un réseau de communication, mis en œuvre dans un premier serveur de résolution de noms (52) dudit réseau, **caractérisé en ce que** ledit procédé comprend :
- la réception (521) d'un message de résolution de noms en provenance dudit terminal, reçu via un canal de communication sécurisé entre ledit terminal (51) et ledit premier serveur de résolution de noms (52),
- l'obtention (522), en provenance d'un serveur d'autorisation (53), d'une autorisation de redirection pour ledit terminal et d'au moins un identifiant d'un deuxième serveur de résolution de noms (55) identifié pour ledit terminal pour ladite redirection, et
- la transmission (523), audit terminal, d'un message de redirection portant ledit au moins un identifiant d'un deuxième serveur de résolution de noms.

12. Procédé selon la revendication 11, **caractérisé en ce qu'**il comprend également, suite à une indication dudit terminal de vérifier la légitimité dudit deuxième serveur de résolution de noms :
- l'obtention d'au moins une information de vérification de la légitimité dudit deuxième serveur de résolution de noms, et
- la transmission audit terminal de ladite au moins une information de vérification.

13. Procédé selon l'une quelconque des revendications 11 et 12, **caractérisé en ce qu'**il comprend, suite à une indication dudit terminal d'un échec d'une connexion avec ledit deuxième serveur de résolution de noms :
- l'obtention, en provenance dudit serveur d'autorisation, d'au moins un nouvel identifiant dudit deuxième serveur de résolution de noms,
- la transmission, audit terminal, dudit au moins un nouvel identifiant dudit deuxième serveur de résolution de noms.

14. Procédé selon l'une quelconque des revendications 11 à 13, **caractérisé en ce qu'**il comprend la désactivation de la redirection de trafic DNS vers ledit deuxième serveur de résolution de noms suite à au moins un échec d'une connexion du terminal avec ledit deuxième serveur de résolution de noms, ou la désactivation d'une redirection de trafic DNS vers un troisième serveur de résolution de noms désigné par défaut pour le terminal sur demande dudit terminal.

15. Procédé d'autorisation d'une redirection d'un trafic DNS d'un terminal (51) dans un réseau de communication, mis en œuvre dans un serveur d'autorisation (53) dudit réseau, ledit terminal ayant émis un message de résolution de noms via un canal de communication sécurisé entre ledit terminal (51) et un premier serveur de résolution de noms (52), **caractérisé en ce qu'**il comprend, si une redirection du trafic DNS du terminal est autorisée :
- l'obtention (531) d'au moins un identifiant d'un deuxième serveur de résolution de noms (55) identifié pour ledit terminal pour ladite redirection, et
- la transmission (532), à destination dudit premier serveur de résolution de noms, d'une autorisation de redirection pour ledit terminal et dudit au moins un identifiant d'un deuxième serveur de résolution de noms.

16. Procédé selon la revendication 15, **caractérisé en ce qu'**il comprend également la transmission, à destination d'un contrôleur dudit réseau, d'au moins un élément appartenant au groupe comprenant :
- au moins un identifiant dudit terminal,
- au moins un identifiant d'un réseau auquel appartient ledit terminal,
- ledit au moins un identifiant dudit deuxième serveur de résolution de noms,
- au moins une information de vérification de la légitimité dudit deuxième serveur de résolution de noms.

17. Procédé selon l'une quelconque des revendications 15 et 16, **caractérisé en ce qu'**il comprend :
- l'obtention, en provenance dudit contrôleur de réseau, d'au moins un nouvel identifiant dudit deuxième serveur de résolution de noms,
- la transmission, audit premier serveur de résolution de noms, dudit au moins un nouvel identifiant dudit deuxième serveur de résolution de noms.

18. Terminal configuré pour une redirection d'un trafic DNS dans un réseau de communication, **caractérisé en ce qu'**il est configuré pour :
- transmettre, à destination d'un premier serveur de résolution de noms, un message de résolution de noms via un canal de communication sécurisé entre ledit terminal et ledit premier serveur de résolution de noms,
- obtenir au moins un identifiant d'un deuxième serveur de résolution de noms pour ladite redirection,
- exécuter au moins une action de gestion de ladite redirection du trafic DNS du terminal vers le deuxième serveur de résolution de noms, parmi au moins :
- vérifier la légitimité dudit deuxième serveur de résolution de noms,
- envoyer une indication d'un échec d'une connexion du terminal avec ledit deuxième serveur de résolution de noms,
- demander la désactivation de ladite redirection du trafic DNS vers ledit deuxième serveur de résolution de noms.

19. Contrôleur de réseau pour le contrôle d'une redirection d'un trafic DNS autorisée pour un terminal dans un réseau de communication,
**caractérisé en ce que** ledit contrôleur est configuré pour :
- échanger des informations avec un deuxième serveur de résolution de noms identifié pour le terminal pour ladite redirection autorisée du trafic DNS du terminal, lesdites informations comprenant au moins une information, fournie par le contrôleur au deuxième serveur de résolution de noms, de vérification par ledit terminal de la légitimité du deuxième serveur de résolution de noms et/ou au moins une information, fournie par le deuxième serveur de résolution de noms au contrôleur, pour la résolution d'un échec d'une connexion du terminal avec le deuxième serveur de résolution de noms.

20. Deuxième serveur de résolution de noms pour la gestion d'une redirection d'un trafic DNS autorisée pour un terminal dans un réseau de communication,
**caractérisé en ce que** ledit deuxième serveur de résolution de noms est identifié pour le terminal pour ladite redirection autorisée du trafic DNS du terminal et configuré pour :
- échanger des informations avec un contrôleur du réseau, lesdites informations comprenant au moins une information, fournie par le contrôleur au deuxième serveur de résolution de noms, de vérification par ledit terminal de la légitimité du deuxième serveur de résolution de noms et/ou au moins une information, fournie par le deuxième serveur de résolution de noms au contrôleur, pour la résolution d'un échec d'une connexion du terminal avec le deuxième serveur de résolution de noms.

21. Premier serveur de résolution de noms pour le traitement d'une redirection d'un trafic DNS autorisée pour un terminal dans un réseau de communication,
**caractérisé en ce qu'**il est configuré pour :
- recevoir un message de résolution de noms en provenance dudit terminal, via un canal de communication sécurisé entre ledit terminal et ledit premier serveur de résolution de noms,
- obtenir, en provenance d'un serveur d'autorisation, une autorisation de redirection pour ledit terminal et au moins un identifiant d'un deuxième serveur de résolution de noms identifié pour ledit terminal pour ladite redirection, et
- transmettre, audit terminal, un message de redirection portant ledit au moins un identifiant d'un deuxième serveur de résolution de noms.

22. Serveur d'autorisation pour l'autorisation d'une redirection d'un trafic DNS d'un terminal dans un réseau de communication,
**caractérisé en ce qu'**il est configuré pour :
- obtenir au moins un identifiant d'un deuxième serveur de résolution de noms identifié pour ledit terminal pour ladite redirection, et
- transmettre, à destination dudit premier serveur de résolution de noms, une autorisation de redirection pour ledit terminal et dudit au moins un identifiant d'un deuxième serveur de résolution de noms.

## Patentansprüche

1. Verfahren zur Namensauflösung, das in einem Endgerät (51) durchgeführt wird, das mit einem Kommunikationsnetzwerk verbunden ist, **dadurch gekennzeichnet, dass** es umfasst:
- das Übertragen (511) einer Namensauflösungsnachricht über einen sicheren Kommunikationskanal zwischen dem Endgerät (51) und dem ersten Erstnamensauflösungsserver (52) an einen ersten Namensauflösungsserver (52),
- falls eine Umleitung des DNS-Verkehrs des Endgeräts autorisiert ist, das Erhalten (512) mindestens einer Kennung eines zweiten Namensauflösungsservers (55) für die Umleitung,
- das Ausführen (513) mindestens einer Aktion zum Verwalten der Umleitung des DNS-Verkehrs des Endgeräts zu dem zweiten Namensauflösungsserver (55) unter mindestens Folgenden:
• Überprüfen der Legitimität des zweiten Namensauflösungsservers,
• Senden einer Angabe eines Scheiterns einer Verbindung des Endgeräts mit dem zweiten Namensauflösungsserver,
• Anfordern der Deaktivierung der Umleitung des DNS-Verkehrs zu dem zweiten Namensauflösungsserver.

2. Verfahren nach Anspruch 1, **dadurch gekennzeichnet, dass** das Senden einer Angabe eines Scheiterns einer Verbindung des Endgeräts mit dem zweiten Namensauflösungsserver ferner das Erhalten einer neuen Kennung des zweiten Namensauflösungsservers bewirkt.

3. Verfahren nach einem der Ansprüche 1 und 2, **dadurch gekennzeichnet, dass** das Überprüfen der Legitimität des zweiten Namensauflösungsservers umfasst:
- das Empfangen mindestens einer Information zur Überprüfung der Legitimität des zweiten Namensauflösungsservers,
- das Überprüfen der Legitimität einer Entität, die eine Antwort auf eine Namensauflösungsanforderung sendet, die von dem Endgerät gesendet wird und ausgehend von der mindestens einen Information zur Überprüfung erzeugt wird, durch Vergleichen der Antwort mit einer Testantwort, die ausgehend von der mindestens einen Information zur Überprüfung erhalten wird.

4. Verfahren zum Steuern einer für ein Endgerät (51) in einem Kommunikationsnetzwerk autorisierten Umleitung eines DNS-Verkehrs, wobei das Endgerät eine Namensauflösungsnachricht über einen sicheren Kommunikationskanal zwischen dem Endgerät (51) und einem ersten Namensauflösungsserver (52) gesendet hat, wobei das Verfahren zum Steuern in einer Steuerung (54) des Netzwerks durchgeführt wird und **dadurch gekennzeichnet ist, dass** es umfasst:
- das Austauschen (541) von Informationen mit einem zweiten Namensauflösungsserver (55), der für das Endgerät für die autorisierte Umleitung des DNS-Verkehrs des Endgeräts identifiziert wird, wobei die Informationen mindestens eine von der Steuerung an den zweiten Namensauflösungsserver übermittelte Information zur Überprüfung der Legitimität des zweiten Namensauflösungsservers durch das Endgerät und/oder mindestens eine von dem zweiten Namensauflösungsserver an die Steuerung übermittelte Information zur Auflösung eines Scheiterns einer Verbindung des Endgeräts mit dem zweiten Namensauflösungsserver umfassen.

5. Verfahren nach Anspruch 4, **dadurch gekennzeichnet, dass** mindestens eine der von dem zweiten Namensauflösungsserver übermittelten Informationen zur Auflösung eines Scheiterns einer Verbindung des Endgeräts mit dem zweiten Namensauflösungsserver mindestens eine neue Kennung des zweiten Namensauflösungsservers umfasst, wobei das Verfahren ferner das Übertragen der mindestens einen neuen Kennung an einen Autorisierungsserver des Netzwerks umfasst.

6. Verfahren nach Anspruch 4, **dadurch gekennzeichnet, dass** es das Erhalten mindestens einer neuen Kennung des zweiten Namensauflösungsservers von einem für das Kommunikationsnetzwerk definierten standardmäßigen Router und das Übertragen der mindestens einen neuen Kennung an einen Autorisierungsserver des Netzwerks umfasst.

7. Verfahren nach einem der Ansprüche 4 bis 6, **dadurch gekennzeichnet, dass** es bei dem Austausch von Informationen das Übertragen mindestens einer Kennung des Endgeräts, das zum Überprüfen der Legitimität des zweiten Namensauflösungsservers autorisiert ist, oder mindestens einer Kennung eines Netzwerks, zu dem das Endgerät gehört, an den zweiten Namensauflösungsserver umfasst.

8. Verfahren zum Verwalten einer für ein Endgerät (51) in einem Kommunikationsnetzwerk autorisierten Umleitung eines DNS-Verkehrs, wobei das Endgerät eine Namensauflösungsnachricht über einen sicheren Kommunikationskanal zwischen dem Endgerät (51) und einem ersten Namensauflösungsserver (52) gesendet hat, wobei das Verfahren zum Verwalten in einem zweiten Namensauflösungsserver (55) des Netzwerks durchgeführt wird, der für das Endgerät für die Umleitung identifiziert wird, **dadurch gekennzeichnet, dass** es umfasst:
- das Austauschen (551) von Informationen mit einer Steuerung des Netzwerks, wobei die Informationen mindestens eine von der Steuerung an den zweiten Namensauflösungsserver übermittelte Information zur Überprüfung der Legitimität des zweiten Namensauflösungsservers durch das Endgerät und/oder mindestens eine von dem zweiten Namensauflösungsserver an die Steuerung übermittelte Information zur Auflösung eines Scheiterns einer Verbindung des Endgeräts mit dem zweiten Namensauflösungsserver umfassen.

9. Verfahren nach Anspruch 8, **dadurch gekennzeichnet, dass** es das Übertragen einer Antwort auf eine Namensauflösungsanforderung an das Endgerät umfasst, wobei die Antwort eine Testantwort trägt, die ausgehend von mindestens einer Kennung des Endgeräts und von der mindestens einen bei dem Austausch mit der Steuerung erhaltenen Information zur Überprüfung der Legitimität des zweiten Namensauflösungsservers erhalten wird.

10. Verfahren nach einem der Ansprüche 8 und 9, **dadurch gekennzeichnet, dass** es umfasst:
- das Erzeugen mindestens einer neuen Kennung des zweiten Namensauflösungsservers,
- das Übertragen der mindestens einen neuen Kennung an die Netzwerksteuerung bei dem Austausch mit der Steuerung.

11. Verfahren zum Verarbeiten einer für ein Endgerät (51) in einem Kommunikationsnetzwerk autorisierten Umleitung eines DNS-Verkehrs, das in einem ersten Namensauflösungsserver (52) des Netzwerks durchgeführt wird, **dadurch gekennzeichnet, dass** das Verfahren umfasst:
- das Empfangen (521) einer Namensauflösungsnachricht von dem Endgerät, die über einen sicheren Kommunikationskanal zwischen dem Endgerät (51) und dem ersten Namensauflösungsserver (52) empfangen wird,
- das Erhalten (522), von einem Autorisierungsserver (53), einer Umleitungsautorisierung für das Endgerät und mindestens einer Kennung eines zweiten Namensauflösungsservers (55), der für das Endgerät für die Umleitung identifiziert wird, und
- das Übertragen (523) einer Umleitungsnachricht, die die mindestens eine Kennung eines zweiten Namensauflösungsservers trägt, an das Endgerät.

12. Verfahren nach Anspruch 11, **dadurch gekennzeichnet, dass** es nach einer Angabe des Endgeräts, die Legitimität des zweiten Namensauflösungsservers zu überprüfen, auch umfasst:
- das Erhalten mindestens einer Information zur Überprüfung der Legitimität des zweiten Namensauflösungsservers, und
- das Übertragen der mindestens einen Information zur Überprüfung an das Endgerät.

13. Verfahren nach einem der Ansprüche 11 und 12, **dadurch gekennzeichnet, dass** es, nach einer Angabe des Endgeräts eines Scheiterns einer Verbindung mit dem zweiten Namensauflösungsserver umfasst:
- das Erhalten mindestens einer neuen Kennung des zweiten Namensauflösungsservers von dem Autorisierungsserver,
- das Übertragen der mindestens einen neuen Kennung des zweiten Namensauflösungsservers an das Endgerät.

14. Verfahren nach einem der Ansprüche 11 bis 13, **dadurch gekennzeichnet, dass** es das Deaktivieren der Umleitung von DNS-Verkehr zu dem zweiten Namensauflösungsserver nach mindestens einem Scheitern einer Verbindung des Endgeräts mit dem zweiten Namensauflösungsserver oder das Deaktivieren einer Umleitung von DNS-Verkehr zu einem dritten Namensauflösungsserver, der für das Endgerät auf Anfordern des Endgeräts standardmäßig bezeichnet wird, umfasst.

15. Verfahren zum Autorisieren einer Umleitung eines DNS-Verkehrs eines Endgeräts (51) in einem Kommunikationsnetzwerk, das in einem Autorisierungsserver (53) des Netzwerks durchgeführt wird, wobei das Endgerät eine Namensauflösungsnachricht über einen sicheren Kommunikationskanal zwischen dem Endgerät (51) und einem ersten Namensauflösungsserver (52) gesendet hat, **dadurch gekennzeichnet, dass** es, falls eine Umleitung des DNS-Verkehrs des Endgeräts autorisiert ist, Folgendes umfasst:
- das Erhalten (531) mindestens einer Kennung eines zweiten Namensauflösungsservers (55), der für das Endgerät für die Umleitung identifiziert wird, und
- das Übertragen (532) einer Umleitungsautorisierung für das Endgerät und der mindestens einen Kennung eines zweiten Namensauflösungsservers an den ersten Namensauflösungsserver.

16. Verfahren nach Anspruch 15, **dadurch gekennzeichnet, dass** es auch das Übertragen, an eine Steuerung des Netzwerks, mindestens eines Elements umfasst, das zu der Gruppe gehört, die Folgendes umfasst:
- mindestens eine Kennung des Endgeräts,
- mindestens eine Kennung eines Netzwerks, zu dem das Endgerät gehört,
- die mindestens eine Kennung des zweiten Namensauflösungsservers,
- mindestens eine Information zur Überprüfung der Legitimität des zweiten Namensauflösungsservers.

17. Verfahren nach einem der Ansprüche 15 und 16, **dadurch gekennzeichnet, dass** es umfasst:
- das Erhalten mindestens einer neuen Kennung des zweiten Namensauflösungsservers von der Netzwerksteuerung,
- das Übertragen der mindestens einen neuen Kennung des zweiten Namensauflösungsservers an den ersten Namensauflösungsserver.

18. Endgerät, das zu einer Umleitung eines DNS-Verkehrs in einem Kommunikationsnetzwerk ausgelegt ist, **dadurch gekennzeichnet, dass** es dazu ausgelegt ist:
- an einen ersten Namensauflösungsserver eine Namensauflösungsnachricht über einen sicheren Kommunikationskanal zwischen dem Endgerät und dem ersten Namensauflösungsserver zu übertragen,
- mindestens eine Kennung eines zweiten Namensauflösungsservers für die Umleitung zu erhalten,
- mindestens eine Aktion zum Verwalten der Umleitung des DNS-Verkehrs des Endgeräts zu dem zweiten Namensauflösungsserver unter mindestens Folgenden auszuführen:
• Überprüfen der Legitimität des zweiten Namensauflösungsservers,
• Senden einer Angabe eines Scheiterns einer Verbindung des Endgeräts mit dem zweiten Namensauflösungsserver,
• Anfordern der Deaktivierung der Umleitung des DNS-Verkehrs zu dem zweiten Namensauflösungsserver.

19. Netzwerksteuerung zum Steuern einer für ein Endgerät in einem Kommunikationsnetzwerk autorisierten Umleitung eines DNS-Verkehr,
**dadurch gekennzeichnet, dass** die Steuerung dazu ausgelegt ist:
- Informationen mit einem zweiten Namensauflösungsserver auszutauschen, der für das Endgerät für die autorisierte Umleitung des DNS-Verkehrs des Endgeräts identifiziert wird, wobei die Informationen mindestens eine von der Steuerung an den zweiten Namensauflösungsserver übermittelte Information zur Überprüfung der Legitimität des zweiten Namensauflösungsservers durch das Endgerät und/oder mindestens eine von dem zweiten Namensauflösungsserver an die Steuerung übermittelte Information zur Auflösung eines Scheiterns einer Verbindung des Endgeräts mit dem zweiten Namensauflösungsserver umfassen.

20. Zweiter Namensauflösungsserver zum Verwalten einer für ein Endgerät in einem Kommunikationsnetzwerk autorisierten Umleitung eines DNS-Verkehrs,
**dadurch gekennzeichnet, dass** der zweite Namensauflösungsserver für das Endgerät für die autorisierte Umleitung des DNS-Verkehrs des Endgeräts identifiziert wird und dazu ausgelegt ist:
- Informationen mit einer Steuerung des Netzwerks auszutauschen, wobei die Informationen mindestens eine von der Steuerung an den zweiten Namensauflösungsserver übermittelte Information zur Überprüfung der Legitimität des zweiten Namensauflösungsservers durch das Endgerät und/oder mindestens eine von dem zweiten Namensauflösungsserver an die Steuerung übermittelte Information zur Auflösung eines Scheiterns einer Verbindung des Endgeräts mit dem zweiten Namensauflösungsserver umfassen.

21. Erster Namensauflösungsserver zum Verarbeiten einer für ein Endgerät in einem Kommunikationsnetzwerk autorisierten Umleitung eines DNS-Verkehrs,
**dadurch gekennzeichnet, dass** er dazu ausgelegt ist:
- eine Namensauflösungsnachricht von dem Endgerät über einen sicheren Kommunikationskanal zwischen dem Endgerät und dem ersten Namensauflösungsserver zu empfangen,
- von einem Autorisierungsserver eine Umleitungsautorisierung für das Endgerät und mindestens eine Kennung eines zweiten Namensauflösungsservers, der für das Endgerät für die Umleitung identifiziert wird, zu erhalten, und
- an das Endgerät eine Umleitungsnachricht zu übertragen, die die mindestens eine Kennung eines zweiten Namensauflösungsservers trägt.

22. Autorisierungsserver zur Autorisierung einer Umleitung eines DNS-Verkehrs eines Endgeräts in einem Kommunikationsnetzwerk,
**dadurch gekennzeichnet, dass** er dazu ausgelegt ist:
- mindestens eine Kennung eines zweiten Namensauflösungsservers, der für das Endgerät für die Umleitung identifiziert wird, zu erhalten, und
- an den ersten Namensauflösungsserver eine Umleitungsautorisierung für das Endgerät und die mindestens eine Kennung eines zweiten Namensauflösungsservers zu übertragen.

## Claims

1. Name resolution method implemented in a terminal (51) connected to a communication network, **characterized in that** it comprises:
- transmitting (511), to a first name resolution server (52), a name resolution message via a secure communication channel between said terminal (51) and said first name resolution server (52),
- if redirection of DNS traffic from the terminal is authorized, obtaining (512) at least one identifier of a second name resolution server (55) for said redirection,
- executing (513), at least one management action to manage said redirection of DNS traffic from the terminal to the second name resolution server (55) among at least:
- verifying the legitimacy of said second name resolution server,
- sending an indication of failure of the terminal to connect with said second name resolution server,
- requesting deactivation of said redirection of DNS traffic to said second name resolution server.

2. Method according to Claim 1, **characterized in that** sending an indication of a failure of the terminal to connect with said second name resolution server further results in a new identifier of the second name resolution server being obtained.

3. Method according to either of Claims 1 and 2, **characterized in that** verifying the legitimacy of the second name resolution server comprises:
- receiving at least one piece of verification information allowing verification of the legitimacy of said second name resolution server,
- verifying the legitimacy of an entity issuing a response to a name resolution request, sent by said terminal and generated from said at least one piece of verification information, by comparing said response with a test response obtained on the basis of said at least one piece of verification information.

4. Control method, for controlling authorized redirection of DNS traffic for a terminal (51) in a communication network, said terminal having sent a name resolution message via a secure communication channel between said terminal (51) and a first name resolution server (52), said control method being implemented in a controller (54) of said network and being **characterized in that** it comprises:
- exchanging (541) information with a second name resolution server (55) identified for the terminal for said authorized redirection of DNS traffic from the terminal, said information comprising at least one piece of verification information, supplied by the controller to the second name resolution server, allowing verification by said terminal of the legitimacy of the second name resolution server and/or at least one piece of information, supplied by the second name resolution server to the controller, allowing resolution of a failure of the terminal to connect with the second name resolution server.

5. Method according to Claim 4, **characterized in that** at least one of said pieces of information supplied by the second name resolution server allowing resolution of a failure of the terminal to connect with the second name resolution server comprises at least one new identifier of said second name resolution server, said method further comprising transmission, to an authorization server of the network, of said at least one new identifier.

6. Method according to Claim 4, **characterized in that** it comprises obtaining, from a default router defined for the communication network, at least one new identifier of said second name resolution server, and transmitting, to an authorization server of the network, said at least one new identifier.

7. Method according to any of Claims 4 to 6, **characterized in that** it comprises, during said exchange of information, transmitting to said second name resolution server at least one identifier of said terminal authorized to verify the legitimacy of the second name resolution server, or at least one identifier of a network to which said terminal belongs.

8. Management method, for managing authorized redirection of DNS traffic for a terminal (51) in a communication network, said terminal having sent a name resolution message via a secure communication channel between said terminal (51) and a first name resolution server (52), said management method being implemented in a second name resolution server (55) of said network identified for said terminal for said redirection, **characterized in that** it comprises:
- exchanging (551) information with a network controller, said information comprising at least one piece of verification information, supplied by the controller to the second name resolution server, allowing verification by said terminal of the legitimacy of the second name resolution server and/or at least one piece of information, supplied by the second name resolution server to the controller, allowing resolution of a failure of the terminal to connect with the second name resolution server.

9. Method according to Claim 8, **characterized in that** it comprises transmitting to said terminal a response to a name resolution request, said response containing a test response obtained on the basis of at least one identifier of the terminal and of said at least one piece of verification information allowing verification of the legitimacy of said second name resolution server obtained during the exchange with the controller.

10. Method according to either of Claims 8 and 9, **characterized in that** it comprises:
- generating at least one new identifier of said second name resolution server,
- transmitting, to said network controller, said at least one new identifier during the exchange with said controller.

11. Method for processing authorized redirection of DNS traffic for a terminal (51) in a communication network, which method is implemented in a first name resolution server (52) of said network, **characterized in that** said method comprises:
- receiving (521) a name resolution message from said terminal, said message being received via a secure communication channel between said terminal (51) and said first name resolution server (52),
- obtaining (522), from an authorization server (53), a redirection authorization for said terminal and at least one identifier of a second name resolution server (55) identified for said terminal for said redirection, and
- transmitting (523), to said terminal, a redirection message containing said at least one identifier of a second name resolution server.

12. Method according to Claim 11, **characterized in that** it also comprises, following an indication from said terminal to verify the legitimacy of said second name resolution server:
- obtaining at least one piece of verification information allowing verification of the legitimacy of said second name resolution server, and
- transmitting to said terminal said at least one piece of verification information.

13. Method according to either of Claims 11 and 12, **characterized in that** it comprises, following an indication from said terminal of a failure to connect with said second name resolution server:
- obtaining, from said authorization server, at least one new identifier of said second name resolution server,
- transmitting, to said terminal, said at least one new identifier of said second name resolution server.

14. Method according to any of Claims 11 to 13, **characterized in that** it comprises deactivating redirection of DNS traffic to said second name resolution server following at least one failure of the terminal to connect with said second name resolution server, or deactivating redirection of DNS traffic to a third name resolution server designated by default for the terminal on request by said terminal.

15. Method for authorizing redirection of DNS traffic from a terminal (51) in a communication network, said method being implemented in an authorization server (53) of said network, said terminal having sent a name resolution message via a secure communication channel between said terminal (51) and a first name resolution server (52), **characterized in that** it comprises, if redirection of DNS traffic from the terminal is authorized:
- obtaining (531) at least one identifier of a second name resolution server (55) identified for said terminal for said redirection, and
- transmitting (532), to said first name resolution server, a redirection authorization for said terminal and said at least one identifier of a second name resolution server.

16. Method according to Claim 15, **characterized in that** it also comprises transmitting, to a controller of said network, at least one element belonging to the group comprising:
- at least one identifier of said terminal,
- at least one identifier of a network to which said terminal belongs,
- said at least one identifier of said second name resolution server,
- at least one piece of verification information allowing verification of the legitimacy of said second name resolution server.

17. Method according to either of Claims 15 and 16, **characterized in that** it comprises:
- obtaining, from said network controller, at least one new identifier of said second name resolution server,
- transmitting, to said first name resolution server, said at least one new identifier of said second name resolution server.

18. Terminal configured for redirection of DNS traffic in a communication network, **characterized in that** it is configured to:
- transmit, to a first name resolution server, a name resolution message via a secure communication channel between said terminal and said first name resolution server,
- obtain at least one identifier of a second name resolution server for said redirection,
- execute at least one management action to manage said redirection of DNS traffic from the terminal to the second name resolution server among at least:
- verifying the legitimacy of said second name resolution server,
- sending an indication of failure of the terminal to connect with said second name resolution server,
- requesting deactivation of said redirection of DNS traffic to said second name resolution server.

19. Network controller for controlling authorized redirection of DNS traffic for a terminal in a communication network,
**characterized in that** said controller is configured to:
- exchange information with a second name resolution server identified for the terminal for said authorized redirection of DNS traffic from the terminal, said information comprising at least one piece of verification information, supplied by the controller to the second name resolution server, allowing verification by said terminal of the legitimacy of the second name resolution server and/or at least one piece of information, supplied by the second name resolution server to the controller, allowing resolution of a failure of the terminal to connect with the second name resolution server.

20. Second name resolution server for managing authorized redirection of DNS traffic for a terminal in a communication network,
**characterized in that** said second name resolution server is identified for the terminal for said authorized redirection of DNS traffic from the terminal and configured to:
- exchange information with a network controller, said information comprising at least one piece of verification information, supplied by the controller to the second name resolution server, allowing verification by said terminal of the legitimacy of the second name resolution server and/or at least one piece of information, supplied by the second name resolution server to the controller, allowing resolution of a failure of the terminal to connect with the second name resolution server.

21. First name resolution server for processing authorized redirection of DNS traffic for a terminal in a communication network,
**characterized in that** it is configured to:
- receive a name resolution message from said terminal, via a secure communication channel between said terminal and said first name resolution server,
- obtain, from an authorization server, a redirection authorization for said terminal and at least one identifier of a second name resolution server identified for said terminal for said redirection, and
- transmit, to said terminal, a redirection message containing said at least one identifier of a second name resolution server.

22. Authorization server for authorizing redirection of DNS traffic from a terminal in a communication network, **characterized in that** it is configured to:
- obtain at least one identifier of a second name resolution server identified for said terminal for said redirection, and
- transmit, to said first name resolution server, a redirection authorization for said terminal and said at least one identifier of a second name resolution server.
